(19) **Europäisches Patentamt / European Patent Office / Office européen des brevets**

(11) **EP 4 661 577 A1**

(12) **EUROPEAN PATENT APPLICATION**
published in accordance with Art. 153(4) EPC

(43) Date of publication:
**10.12.2025 Bulletin 2025/50**

(21) Application number: **23918998.8**

(22) Date of filing: **31.01.2023**

(51) International Patent Classification (IPC):
**H04W 74/00** (2009.01)

(52) Cooperative Patent Classification (CPC):
**H04W 74/00**

(86) International application number:
**PCT/CN2023/074028**

(87) International publication number:
**WO 2024/159418 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **FU, Zhe**
  **Dongguan, Guangdong 523860 (CN)**
• **LIANG, Bin**
  **Dongguan, Guangdong 523860 (CN)**

(74) Representative: **RGTH**
**Patentanwälte PartGmbB**
**Neuer Wall 10**
**20354 Hamburg (DE)**

(54) **WIRELESS COMMUNICATION METHOD, TERMINAL DEVICE, AND NETWORK DEVICE**

(57) The present application provides a wireless communication method, a terminal device, and a network device. The method comprises: a terminal device using first information to perform random access, the first information being related to a first uplink subband, or the first information being related to a first terminal.

FIG. 7

EP 4 661 577 A1

**Description**

**TECHNICAL FIELD**

This application relates to the field of communications technologies, and more specifically, to a wireless communication method, a terminal device, and a network device.

**BACKGROUND**

A terminal device may implement uplink synchronization with a network device through random access. Currently, there is no clear solution for reducing a delay in performing random access by a terminal device.

**SUMMARY**

This application provides a wireless communication method, a terminal device, and a network device. The following describes various aspects related to this application.

According to a first aspect, a wireless communication method is provided, and the method includes: executing, by a terminal device, random access by using first information, where the first information is related to a first uplink subband, or the first information is related to a first terminal.

According to a second aspect, a wireless communication method is provided, and the method includes: receiving, by a network device, a first message transmitted by a terminal device, where the first message is used for random access, the first message is determined based on first information, and the first information is related to a first uplink subband, or the first information is related to a first terminal.

According to a third aspect, a terminal device is provided, and the terminal device includes: an execution unit, configured to execute random access by using first information, where the first information is related to a first uplink subband, or the first information is related to a first terminal.

According to a fourth aspect, a network device is provided, and the network device includes: a receiving unit, configured to receive a first message transmitted by a terminal device, where the first message is used for random access, the first message is determined based on first information, and the first information is related to a first uplink subband, or the first information is related to a first terminal.

According to a fifth aspect, a terminal device is provided. The terminal device includes a memory and a processor, where the memory is configured to store a program, and the processor is configured to invoke the program in the memory to execute the method according to the first aspect.

According to a sixth aspect, a network device is provided. The network device includes a memory and a processor, where the memory is configured to store a program, and the processor is configured to invoke the program in the memory, to execute the method according to the second aspect.

According to a seventh aspect, an apparatus is provided. The apparatus includes a processor, configured to invoke a program from a memory to execute the method according to the first aspect.

According to an eighth aspect, an apparatus is provided. The apparatus includes a processor, configured to invoke a program from a memory to execute the method according to the second aspect.

According to a ninth aspect, a chip is provided. The chip includes a processor, configured to invoke a program from a memory to cause a device installed with the chip to perform the method according to the first aspect.

According to a tenth aspect, a chip is provided. The chip includes a processor, configured to invoke a program from a memory to cause a device installed with the chip to perform the method according to the second aspect.

According to an eleventh aspect, a computer-readable storage medium is provided, where a program is stored on the computer-readable storage medium, and the program causes a computer to execute the method according to the first aspect.

According to a twelfth aspect, a computer-readable storage medium is provided, where a program is stored on the computer-readable storage medium, and the program causes a computer to execute the method according to the second aspect.

According to a thirteenth aspect, a computer program product is provided. The computer program product includes a program, where the program causes a computer to execute the method according to the first aspect.

According to a fourteenth aspect, a computer program product is provided. The computer program product includes a program, where the program causes a computer to execute the method according to the second aspect.

According to a fifteenth aspect, a computer program is provided. The computer program causes a computer to execute the method according to the first aspect.

According to a sixteenth aspect, a computer program is provided. The computer program causes a computer to execute the method according to the second aspect.

A terminal device in embodiments of this application may perform random access by using first information related to a first uplink subband or related to a first terminal, thereby reducing a delay in random access.

## BRIEF DESCRIPTION OF DRAWINGS

FIG. 1 is a schematic diagram of a communications system to which embodiments of this application are applicable.
FIG. 2 is a schematic flowchart of four-step random access.
FIG. 3 is a schematic flowchart of two-step random access.
FIG. 4 is a schematic structural diagram in which an uplink subband is located in a downlink time unit.
FIG. 5 is another schematic structural diagram in which an uplink subband is located in a downlink time unit.
FIG. 6 is a schematic structural diagram in which an uplink subband is located in a downlink time unit and a flexible time unit.
FIG. 7 is a schematic flowchart of a wireless communication method according to an embodiment of this application.
FIG. 8 is a schematic block diagram of a terminal device according to an embodiment of this application.
FIG. 9 is a schematic block diagram of a network device according to an embodiment of this application.
FIG. 10 is a schematic structural diagram of a communications apparatus according to an embodiment of this application.

## DESCRIPTION OF EMBODIMENTS

Technical solutions in this application are described below with reference to the accompanying drawings.

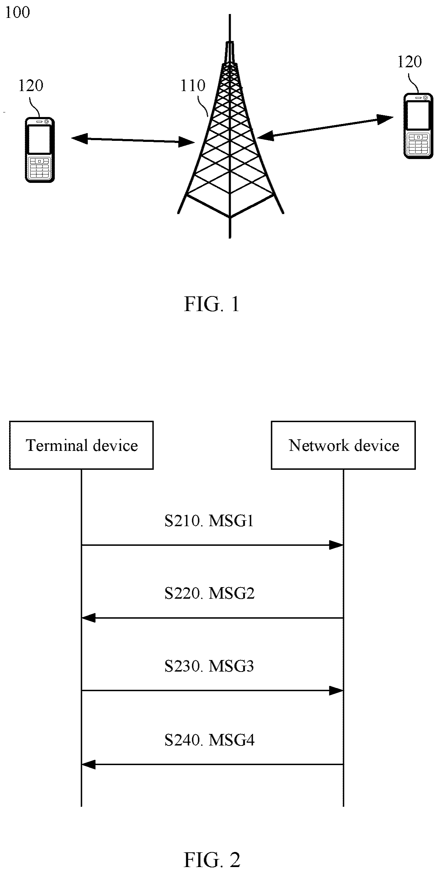

FIG. 1 shows a wireless communications system 100 to which embodiments of this application are applied. The wireless communications system 100 may include a network device 110 and a terminal device 120. The network device 110 may be a device that communicates with the terminal device 120. The network device 110 may provide communication coverage for a specific geographic area, and may communicate with a terminal device 120 within the coverage.

FIG. 1 exemplarily shows one network device and two terminals. Optionally, the wireless communications system 100 may include a plurality of network devices, and another quantity of terminal devices may be included in coverage of each network device, which is not limited in embodiments of this application.

Optionally, the wireless communications system 100 may further include another network entity such as a network controller or a mobility management entity, which is not limited in embodiments of this application.

It should be understood that the technical solutions of embodiments of this application may be applied to various communications systems, such as a 5th generation (5th generation, 5G) system or a new radio (new radio, NR) system, a long-term evolution (long term evolution, LTE) system, an LTE frequency division duplex (frequency division duplex, FDD) system, and an LTE time division duplex (time division duplex, TDD) system. The technical solutions provided in this application may further be applied to a future communications system, such as a 6th-generation mobile communications system or a satellite communications system.

The terminal device in embodiments of this application may also be referred to as a user equipment (user equipment, UE), an access terminal, a subscriber unit, a subscriber station, a mobile site, a mobile station (mobile station, MS), a mobile terminal (mobile Terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be configured to function as a base station. For example, the UE may function as a scheduling entity, which provides a sidelink signal between UEs in V2X, D2D, or the like. For example, a cellular phone and a vehicle communicate with each other through a sidelink signal. A cellular phone and a smart home device communicate with each other, without relaying a communication signal through a base station.

The network device in embodiments of this application may be a device for communicating with the terminal device. The network device may also be referred to as an access network device or a wireless access network device. For example, the network device may be a base station. The network device in embodiments of this application may be a radio access network (radio access network, RAN) node (or device) that connects the terminal device to a wireless network. The base station may broadly cover the following various names, or may be replaced with the following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNode MeNB, a secondary eNode SeNB, a multi-standard radio (MSR) node, a home base station, a network controller, an access node, a radio node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, vehicle-to-everything (vehicle-to-everything, V2X), and machine-to-machine (machine-to-machine, M2M) communications, a network-side device in a 6G network, a device that functions as a base station in a future communications system, or the like. The base station may support networks of a same access technology or different access technologies. A specific technology and a specific device form used by the network device are not limited in embodiments of this application.

The base station may be a fixed or mobile base station. For example, a helicopter or an unmanned aerial vehicle may be configured to serve as a mobile base station, and one or more cells may move based on a position of the mobile base station. In another example, a helicopter or an unmanned aerial vehicle may be configured to serve as a device in communication with another base station.

In some deployments, the network device in embodiments of this application may be a CU or a DU, or the network device includes a CU and a DU. The gNB may further include an AAU.

The network device and the terminal device may be deployed on land, including being indoors or outdoors, handheld, or vehicle-mounted, may be deployed on a water surface, or may be deployed on a plane, a balloon, or a satellite in the air. A scenario in which the network device and the terminal device are located is not limited in embodiments of this application.

It should be understood that the communications device involved in this application may be a network device, or may be a terminal device. For example, the first communications device is a network device, and the second communications device is a terminal device. For another example, the first communications device is a terminal device, and the second communications device is a network device. For another example, both the first communications device and the second communications device are network devices, or both are terminal devices.

It should be understood that all or some of functions of the communications device in this application may also be implemented by software functions running on hardware, or by virtualization functions instantiated on a platform (for example, a cloud platform).

**Random** access

A terminal device may implement uplink synchronization with a network device through random access. There are a plurality of trigger events in a random access procedure, which is not specifically limited in embodiments of this application. For example, the trigger event may include one or more of the following: initial access in an RRC_IDLE state; an RRC connection reestablishment process; handover; in an RRC connected state, an uplink being in an unsynchronized state when uplink data or downlink data arrives; in an RRC connected state, no PUCCH resource being used for an SR when uplink data arrives; an SR failing; a request of the RRC during synchronization reconfiguration; access in an RRC_INACTIVE state; time alignment being established when a SCell is added; requesting other SI; or beam failure recovery.

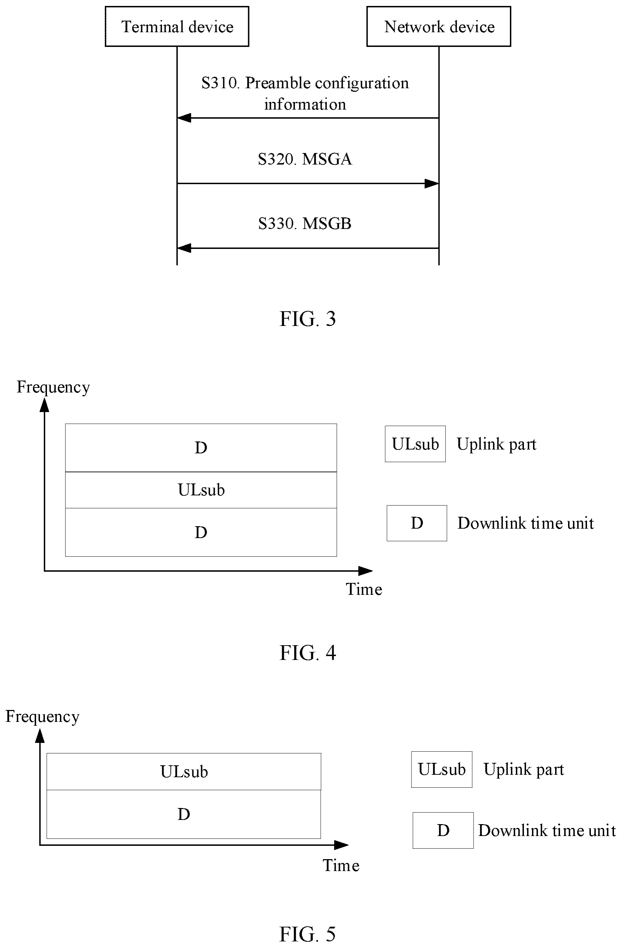

There are two random access modes: contention-based random access and contention-free random access. The two random access modes are described below with reference to FIG. 2 and FIG. 3.

FIG. 2 is a flowchart of a contention-based random access method according to an embodiment of this application, and the method includes step S210 to step S240.

In step S210, a terminal device transmits a message 1 (message 1, MSG1) to a network device in a random access procedure, where the message 1 includes a preamble (preamble).

The terminal device may select a random access channel (random access channel, RACH) resource and a preamble, and transmit the selected preamble on the selected resource. The RACH resource may also be referred to as a physical random access channel (physical random access channel, PRACH) resource.

The network device may transmit configuration information of a RACH to the terminal device by broadcasting. The configuration information of the RACH may include configuration information of a time-frequency resource of the RACH and configuration information of an initial preamble root sequence.

The configuration information of the time domain resource of the RACH may be indicated by one RACH configuration index. The RACH configuration index may include at least one of a repetition period of a RACH resource, a quantity of RACH occasions (RACH occasion, RO) included in one RACH resource repetition period, or duration of each RO. The configuration information of the frequency domain resource of the RACH may include one RACH start frequency domain resource index and a quantity of RACH resources (namely, a quantity of consecutive RACH frequency domain resources) for which frequency division multiplexing may be performed at a same instant. A segment of consecutive frequency domain resources may be determined by using the configuration information of the RACH frequency domain resource. The initial preamble root sequence can be broadcast through a cell, and each cell can broadcast one preamble root sequence. Based on the configured initial preamble root sequence, an available preamble set of a cell can be obtained by using cyclic shift.

The configuration information of the RACH may be carried in a system message, that is, the network device may transmit configuration information of the RACH through the system message. The system message may include a synchronization signal/physical broadcast channel block (synchronization signal/physical broadcast channel block, SSB), the network device may broadcast an SSB to the terminal device, and the SSB may be a CD-SSB. The SSB may include a master information block MIB and a system information block of a camping cell. The system information block may include a SIB1 and another SIB. The SIB1 may indicate configuration information related to an initial BWP used for initial access of the terminal device, and the configuration information may include an initial uplink BWP and an initial downlink BWP. In the initial uplink BWP, the network device may configure a random access resource for a terminal device that performs initial access. There is a correspondence between the random access resource and an SSB. For example, the network device may control the terminal device to select a random access resource by configuring a reference signal received power (reference signal receiving power, RSRP) threshold. When the random access procedure is triggered, the terminal device may select an SSB whose RSRP measurement value meets the RSRP threshold, and select, based on the correspondence between the SSB and the random access resource, a corresponding random access resource to transmit the preamble.

In step S220, the network device transmits a MSG2 to the terminal device, where the MSG2 may also be referred to as a random access response (random access response, RAR). The MSG2 may be carried through a physical downlink control channel (physical downlink control channel, PDCCH).

After the terminal device transmits the MSG1, a random access response time window may be enabled, and a PDCCH scrambled by a random access-radio network temporary identifier (random access-radio network temporary identifier, RA-RNTI) is monitored in the time window. The RA-RNTI may be calculated according to the following formula:

$$RA\text{-}RNTI = 1 + s\_id + 14 \times t\_id + 14 \times 80 \times f\_id + 14 \times 80 \times 8 \times ul\_carrier\_id$$

in which, s_id denotes an index ($0 \leq$ s_id < 14) of a first orthogonal frequency division multiplexing (Orthogonal Frequency Division Multiplexing, OFDM) symbol of a RACH resource; t_id denotes an index ($0 \leq$ t_id < 80) of a first slot of the RACH resource in a system frame; f_id denotes an index ($0 \leq$ f_id < 8) of a RACH resource in frequency domain; and ul_carrier_id is an uplink carrier for transmitting a preamble, where 0 denotes a normal uplink carrier, and 1 denotes a supplementary uplink (supplementary uplink, SUL) carrier.

It can be learned from the foregoing formula that the RA-RNTI is related to a time-frequency resource of a RACH used by the terminal device to transmit the MSG1. After receiving the PDCCH, the terminal device may decode the PDCCH by using the RA-RNTI.

The MSG2 may further include a preamble transmitted by the terminal device. If the terminal device receives a PDCCH scrambled by a RA-RNTI and the MSG2 includes a preamble transmitted by the terminal device, it may be determined that the terminal device has successfully received the random access response.

After successfully receiving the PDCCH, the terminal device can obtain a physical downlink shared channel (physical downlink shared channel, PDSCH) scheduled by the PDCCH, where the PDSCH includes a RAR. The RAR may include a plurality of pieces of information. For example, a subheader (subheader) in the RAR may include a backoff indicator (backoff indicator, BI), and the BI may be used for indicating a backoff time for retransmitting the MSG1; random access preamble identification (random access preamble identification, RAPID) in the RAR indicates a preamble index received by the network device in response; a payload (payload) in the RAR may include a timing advance group (timing advance group, TAG), and the TAG may be used to adjust uplink timing; the RAR may further include an uplink grant (UL grant) used for scheduling an uplink resource indication for a MSG3; and the RAR may further include a temporary cell-radio network temporary identifier (cell-radio network temporary identifier, C-RNTI). For a terminal device that performs initial access, the terminal device may decode a PDCCH of a MSG4 by using the temporary C-RNTI.

In step S230, the terminal device transmits the MSG3 to the network device. The terminal device may transmit the MSG3 on an uplink grant scheduled by the network device. The MSG3 may also be referred to as a radio resource control (Radio Resource Control, RRC) connection establishment request message.

The MSG3 is mainly used to inform the network device of an event that triggers the random access procedure. For example, in the case of an initial access random procedure, the terminal device may add a UE identity (Identity, ID) and an establishment cause (establishment cause) to the MSG3. In the case of RRC reconstruction, the terminal device may add a UE identity in a connected state and an establishment cause to the MSG3.

In step S240, the network device transmits the MSG4 to the terminal device.

The MSG4 has two functions: one is used for contention conflict resolution, and the other is used for transmitting an RRC configuration message to the terminal device. If the terminal device has added a C-RNTI to the MSG3, the MSG4 is scheduled by using a PDCCH scrambled by the C-RNTI. Accordingly, the terminal device may decode the PDCCH by using the C-RNTI in the MSG3 to obtain the MSG4. If the terminal device has not added a C-RNTI to the MSG3, for example, in the case of initial access, the MSG4 may be scheduled by using a PDCCH scrambled by a temporary C-RNTI. Accordingly, the terminal device may decode the PDCCH by using the temporary C-RNTI in the MSG2 to obtain the MSG4. After successfully decoding the PDCCH, the terminal device obtains a PDSCH that carries the MSG4. The terminal device may compare a common control channel (common control channel, CCCH) service data unit (service data unit, SDU) in the PDSCH with a CCCH SDU in the MSG3. If the two SDUs are the same, it indicates that the contention resolution is successful.

Each time after the terminal device transmits a preamble, the terminal device detects a RAR within a RAR window. If the RAR transmitted by the network device has not been received within the RAR window, or the terminal device has not received a MSG4, the terminal device is required to retransmit a RACH, that is, the terminal device may transmit a preamble again on a next available RACH resource. This process is also referred to as RACH retransmission (retransmission).

The random access procedure of the terminal device may include a plurality of RACH transmissions. In embodiments of this application, a 1st RACH transmission in the random access procedure may be referred to as an initial RACH transmission, and a subsequent RACH transmission may be referred to as a RACH retransmission. A parameter for performing RACH retransmission by the terminal device may be indicated by using a RACH priority parameter. The RACH priority parameter may include a power adjustment parameter and/or a backoff parameter. The power adjustment parameter may also be referred to as a power ramping parameter, and the backoff parameter may include a BI.

In order to improve RACH coverage, a power of the terminal device for transmitting a preamble increases by one step size based on a previous transmit power. In a case that the terminal device supports a plurality of transmit beams, if the transmit beam remains unchanged, a transmit power of a retransmitted RACH also increases based on a previous RACH transmit power. Such a manner of determining the transmit power can prevent the terminal device from performing transmission using more power than necessary, so that interference caused by transmitting a RACH by the terminal device may be reduced. The power adjustment parameter may be used for determining a step size of power ramping.

In addition, the backoff parameter BI actually indicates a waiting time range for the terminal device to retransmit a preamble. If the terminal device has not received a RAR message within a specified time range, or a preamble sequence index in a RAR message does not match that of the terminal device, the terminal device may determine that random access fails. The terminal device is required to delay for a period of time to perform next random access. A time range for the delay may be indicated by the BI. The terminal device may randomly select a value from 0 to BI. In this way, a probability that the terminal device transmits the preamble again at a same time can be reduced.

FIG. 3 is a flowchart of a contention-free random access method according to an embodiment of this application. The method includes step S310 to step S330.

In step S310, a network device transmits preamble configuration information to a terminal device, where the configuration information includes a preamble and a RACH resource required in a random access procedure.

In step S320, the terminal device may transmit a MSGA to the network device based on the preamble configuration information, that is, the terminal device may transmit the preamble to the network device on the RACH resource.

In step S330, the network device transmits a MSGB to the terminal device, where the MSGB may include a RAR. When the RAR is received by the terminal device , it indicates that the random access procedure ends.

To distinguish between two-step random access and four-step random access, the network device supports two types of RACH configurations. The following describes the two RACH configurations. For ease of description, in the following, a RACH configuration corresponding to the two-step random access is referred to as a first RACH configuration, and a RACH configuration corresponding to the four-step random access is referred to as a second RACH configuration.

1. The first RACH configuration and the second RACH configuration share an RO, but the first RACH configuration and the second RACH configuration have independent preambles. The network device may identify, based on a range in which a received preamble is located, an access category selected by the terminal device.

2. The first RACH configuration and the second RACH configuration share a preamble, but the first RACH configuration and the second RACH configuration have independent ROs. The network device may identify, based on an RO location (namely, a time-frequency location) of a received preamble, an access category selected by the terminal device.

For the four-step random access, after transmitting a preamble, the terminal device is required to monitor a RAR scheduled by a PDCCH scrambled by a RA-RNTI. For the two-step random access, after transmitting a preamble and a payload (payload), the terminal device is required to monitor a MSGB scheduled by a PDCCH scrambled by a MSGB-RNTI. The RAR and the MSGB have different MAC PDU formats, and a terminal device in R15 is not required to support interpretation of the MSGB. Therefore, on a receiving side, the MSGB-RNTI may be identified by adding an offset to the RA-RNTI, because RACH resources of the two-step random access and four-step random access may be reused. In this way, the terminal device can determine an access category based on a value of a RNTI by using an offset.

**Subband full duplex (subband full duplex, SBFD) technology**

A duplex technology refers to bi-directional data transmission between two communications devices. The duplex technology may include a full-duplex mode and a half-duplex mode. An existing duplex technology may include FDD and TDD.

In an FDD mode, receiving and transmitting in a communications system are performed on two separate symmetrical frequency channels (namely, carriers), and a receiving channel and a transmitting channel (or uplink and downlink) are separated by using different frequency bands. In a TDD mode, receiving and transmitting in a communications system are performed in different slots on a same frequency channel, and a receiving channel and a transmitting channel are separated by using different time.

A TDD frame format may include a downlink time unit, a flexible time unit, and an uplink time unit. The downlink time unit may be used for downlink transmission. The uplink time unit may be used for uplink transmission. The flexible time unit may be used for uplink transmission, or may be used for downlink transmission.

Currently, a cross division duplex (cross division duplex, XDD) technology is introduced in a protocol, that is, data may be transmitted and received simultaneously on different subbands of a same time unit. This technology is mainly used on a base station side, that is, the base station side may simultaneously transmit and receive data on different subbands. For a terminal device, the terminal device only supports transmitting or receiving data in one time unit. The time unit may be a slot, a radio frame, a symbol, or the like.

With the development of technologies, a SBFD technology appears. SBFD differs from conventional FDD or TDD in that, in the FDD or TDD, a given carrier is generally fully dedicated for uplink or downlink communication. In the case of the SBFD, part of time-frequency resources on a given carrier are dedicated to uplink communication, and part of time-frequency resources on the same carrier support downlink communication. Currently, an endpoint for communication by using the SBFD may simultaneously perform transmission and reception on different subbands (or frequency resources) of a same carrier. In other words, a downlink resource is separated from an uplink resource in frequency domain. Currently, the SBFD configuration may be semi-static.

In some embodiments, a TDD carrier may be divided into a plurality of subbands, where part of subbands may be used for uplink transmission and part of subbands may be used for downlink transmission. In other words, there is an uplink subband in a downlink time unit, or there is a downlink subband in an uplink time unit. Certainly, the subband may alternatively be in a flexible time unit, that is, there is an uplink subband in the flexible time unit, or there is a downlink subband in the flexible time unit. The time unit may include a radio frame, a subframe, a slot, a symbol, or the like.

The uplink subband in embodiments of this application may also be referred to as an uplink part, and the downlink subband may also be referred to as a downlink part.

FIG. 4 is a schematic diagram in which an uplink subband is located in a downlink time unit. Assuming that the time unit is a slot, a DL part of the slot and a UL part of the slot are separated from each other in frequency domain. The subband in FIG. 4 includes one uplink subband and two downlink subbands, and the uplink subband is located between the two downlink subbands.

FIG. 5 shows a schematic diagram in which another uplink subband is located in a downlink time unit. The subband in FIG. 5 includes one uplink subband and one downlink subband, and the uplink subband is located on a side of the downlink subband.

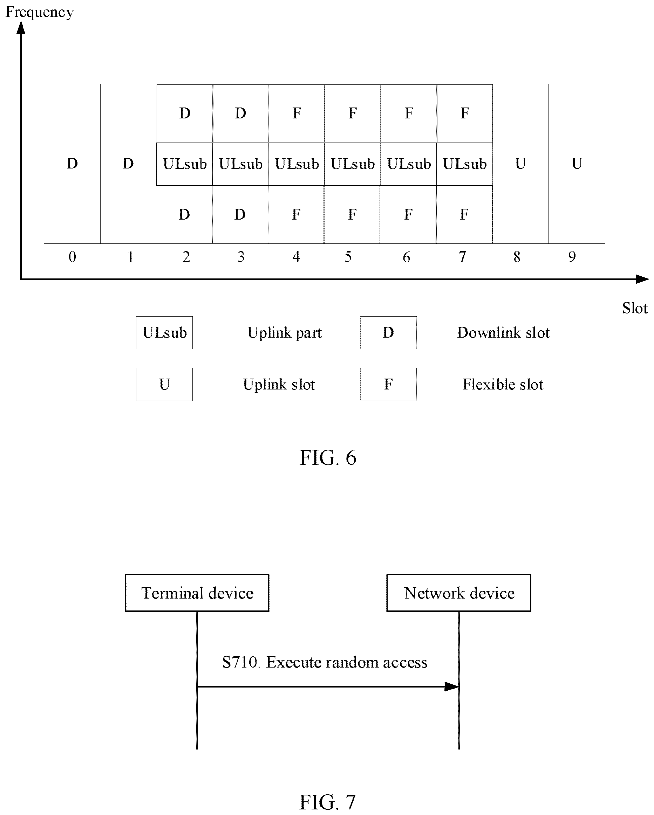

In some embodiments, an uplink subband may alternatively be located in a flexible time unit, as shown in FIG. 6. In a frame structure shown in FIG. 6, an uplink subband may be located in a downlink slot or a flexible slot.

Time units in which the uplink subbands shown in FIG. 4 to FIG. 6 are located are consecutive. In some embodiments, a time unit in which an uplink subband is located may alternatively be discontinuous.

A downlink time unit or a flexible time unit that includes an uplink subband may also be referred to as a SBFD time unit, or an uplink time unit or a flexible time unit that includes a downlink subband may also be referred to as a SBFD time unit. The SBFD time unit may include a SBFD slot, a SBFD subframe, a SBFD symbol, or the like. In an example of FIG. 6, a slot 2 to a slot 7 may be referred to as SBFD slots.

In the foregoing random access scenario, how to reduce a delay in performing random access by a terminal device is an urgent problem to be solved at present.

Based on this, embodiments of this application provide a wireless communication method and an apparatus, in which a terminal device may perform random access by using first information related to a first uplink subband or related to a first terminal, so as to reduce a delay in random access.

With reference to FIG. 7, a wireless communication method according to embodiments of this application is described below. The method shown in FIG. 7 includes step S710.

In step S710, a terminal device performs random access by using first information. In other words, the terminal device transmits a first message to a network device, where the first message is used for random access, and the first message is determined based on the first information.

In some embodiments, the first information is related to a first uplink subband, or the first information is related to a first terminal.

The first uplink subband is not specifically limited in embodiments of this application. The first uplink subband may meet one or more of the following: being located outside an uplink time unit; being located in a downlink time unit; being located in a flexible time unit; or corresponding to an uplink subband full-duplex mode or an uplink subband full-duplex configuration.

Optionally, the uplink time unit may include one or more of an uplink subframe, an uplink slot, or an uplink symbol. Optionally, a unit of the uplink time unit may be a specific unit, or may be a multiple of a specific unit. The specific unit may be, for example, Tc. Optionally, the downlink time unit may include one or more of a downlink subframe, a downlink slot, or a downlink symbol. Optionally, a unit of the downlink time unit may be a specific unit, or may be a multiple of a specific unit. The specific unit may be, for example, Tc. Optionally, the flexible time unit may include one or more of a flexible subframe, a flexible slot, or a flexible symbol. A unit of the flexible time unit may be a specific unit, or may be a multiple of a specific unit. The specific unit may be, for example, Tc. Optionally, the uplink subband full-duplex mode or uplink subband full-duplex configuration may refer to an uplink SBFD mode or uplink SBFD configuration.

In some embodiments, the first uplink subband may be an uplink subband shown in FIG. 4 to FIG. 6.

In some embodiments, the terminal device may perform random access by using the first uplink subband. Performing random access by using the first uplink subband may increase a quantity of resources that may be selected for performing random access by the terminal device, or may enable a network to learn a type of the terminal device as soon as possible, thereby reducing a delay in performing random access by the terminal device.

In some embodiments, the process of performing random access by the terminal device by using the first uplink subband may include: performing a random access procedure by the terminal device by using a RACH resource for SBFD.

In some embodiments, the first terminal may include one or more of the following: a terminal device that supports the first uplink subband, or a terminal device that receives a RACH configuration for the first uplink subband. The terminal device that supports the first uplink subband may be understood as a terminal device that supports SBFD, or a terminal device that supports uplink SBFD.

In some embodiments, the network device may transmit first configuration information to the terminal device. The first configuration information may include a RACH configuration and/or a first uplink subband configuration. The following describes the RACH configuration and the first uplink subband configuration.

The RACH configuration may include a RACH resource and/or a RACH priority parameter. The RACH resource may include a preamble and/or an RO. The RACH priority parameter may include a power adjustment parameter and/or a backoff parameter.

In some embodiments, the RACH configuration may include only the RACH resource. In some embodiments, the RACH configuration may include only the RACH priority parameter. The RACH configuration may include both the RACH resource and the RACH priority parameter.

In some embodiments, the RACH configuration may include a first RACH configuration and/or a second RACH configuration. The first RACH configuration may be understood as a RACH configuration for SBFD, or a RACH configuration for the first terminal. The second RACH configuration may be understood as a RACH configuration for legacy, or the second RACH configuration may be understood as a RACH configuration for a non-first uplink subband.

Optionally, the first RACH configuration may meet one or more of the following: being related to the first terminal, being related to the first uplink subband, or including a RACH configuration for the first uplink subband. For example, the first RACH configuration may include a RACH configuration for the first terminal. For another example, the first RACH configuration may include a RACH configuration for the first uplink subband. For another example, the first RACH configuration may include a RACH configuration for SBFD.

Optionally, the second RACH configuration may meet one or more of the following: being related to a non-first uplink subband, including a RACH configuration for a non-first uplink subband, or including a RACH configuration for an uplink time unit. The second RACH configuration may be a legacy (legacy) RACH configuration. For example, the second RACH configuration may include a RACH configuration for a second terminal. For another example, the second RACH configuration may include a RACH configuration for a non-first uplink subband. For another example, the second RACH configuration may include a RACH configuration for an uplink time unit.

The second terminal may include one or more of the following: a terminal device that does not support SBFD, a terminal device that does not receive the first RACH configuration, or a legacy terminal device.

Optionally, the second RACH configuration may be used by the second terminal to select a RACH resource and/or execute random access. Optionally, the second RACH configuration may also be used by the first terminal to select a RACH resource and/or execute random access, or the second RACH configuration may be used by the first terminal to select a RACH resource and/or execute random access when a condition is met. Optionally, the condition may include one or more of the following: no first RACH configuration being configured, no resource corresponding to the first RACH configuration being available, no resource corresponding to the first RACH configuration being available in a specific time, or the first terminal being a specific first terminal.

Optionally, the first RACH configuration may be used by the first terminal to select a RACH resource and/or perform random access.

In some embodiments, a power adjustment value corresponding to the first RACH configuration is the same as a power adjustment value corresponding to the second RACH configuration, and/or a backoff value corresponding to the first RACH configuration is the same as a backoff value corresponding to the second RACH configuration.

In some embodiments, a power adjustment value corresponding to the first RACH configuration is different from a power adjustment value corresponding to the second RACH configuration, and/or a backoff value corresponding to the first RACH configuration is different from a backoff value corresponding to the second RACH configuration.

In some embodiments, a power adjustment value corresponding to the first RACH configuration may be higher than a power adjustment value corresponding to the second RACH configuration, and/or a backoff value corresponding to the first RACH configuration is less than a backoff value corresponding to the second RACH configuration. Therefore, a terminal device that uses or selects the first RACH configuration may perform random access by using a lower backoff value or a higher power adjustment value, so that a delay for performing random access can be reduced.

In some embodiments, at least one of the first RACH configuration or the second RACH configuration may be used for performing one or more of the following: selecting a RACH resource by the terminal device; selecting a RACH priority parameter by the terminal device; executing random access by the terminal device; identifying the terminal device by the network device; transmitting related information of the terminal device by the terminal device; or transmitting related information of an uplink subband by the terminal device.

In some embodiments, the process of selecting the RACH resource by the terminal device may include that the terminal device selects the RACH resource from one or more RACH resources. For example, if only one RACH resource is configured in a RACH configuration (for example, the first RACH configuration or the second RACH configuration), the terminal device may directly determine that the RACH resource is a RACH resource to be used. For another example, if only one RACH resource is configured in a RACH configuration (for example, the first RACH configuration or the second RACH configuration), the terminal device may select a default RACH resource as a RACH resource to be used, or a specific terminal device (for example, the first terminal or the second terminal) may select a default RACH resource as a RACH resource to be used. For another example, if only a first RACH resource is configured in a RACH configuration (for example, the first RACH configuration or the second RACH configuration), the second terminal may select a default RACH resource as a RACH resource to be used. For another example, if only a second RACH resource is configured in a RACH configuration (for example, the first RACH configuration or the second RACH configuration), the first terminal may select a default RACH resource as a RACH resource to be used. In some embodiments, the process of selecting the RACH priority parameter by the terminal device may include that the terminal device selects the RACH priority parameter from one or more RACH priority parameters. For example, if only one RACH priority parameter is configured in a RACH configuration (for example, the first RACH configuration or the second RACH configuration), the terminal device may directly determine that the RACH priority parameter is a RACH priority parameter to be used. For another example, if only one RACH priority parameter is configured in a RACH configuration (for example, the first RACH configuration or the second RACH configuration), the terminal device (for example, a first RACH terminal or a second RACH terminal) may select a default RACH priority parameter as a RACH priority parameter to be used, or a specific terminal device (for example, the first terminal or the second terminal) may select a default RACH priority parameter as a RACH priority parameter to be used. For another example, if only a first RACH priority parameter is configured in a RACH configuration (for example, the first RACH configuration or the second RACH configuration), the second terminal may select a default RACH priority parameter as a RACH priority parameter to be used. For another example, if only a second RACH priority parameter is configured in a RACH configuration (for example, the first RACH configuration or the second RACH configuration), the first terminal may select a default RACH priority parameter as a RACH priority parameter to be used.

In some embodiments, if the terminal device selects the first RACH configuration, the terminal device may execute random access by using the first RACH configuration. If the terminal device selects the second RACH configuration, the terminal device may execute random access by using the second RACH configuration.

In some embodiments, the process of identifying the terminal device by the network device may include that the network device determines whether the terminal device is the terminal device that supports the first uplink subband. For example, if the terminal device selects or uses the first RACH configuration, the network device may determine that the terminal device is the terminal device that supports the first uplink subband. For another example, if the terminal device selects or uses the second RACH configuration, the network device may determine that the terminal device is a terminal device that does not support the first uplink subband. For another example, if the terminal device selects or uses the second RACH configuration, and reports related information (for example, the related information of the first terminal or the related information of the first uplink subband) to the network device in the random access procedure, the network device may determine that the terminal device is the terminal device that supports the first uplink subband. For another example, if the terminal device selects or uses the second RACH configuration, and reports related information (for example, the related information of the first terminal or the related information of the first uplink subband) to the network device in assistance information or other information, the network device may determine that the terminal device is the terminal device that supports the first uplink subband.

In some embodiments, if the terminal device selects the first RACH configuration, the terminal device may transmit related information of the first terminal to the network device. In some embodiments, if the terminal device selects the second RACH configuration, the terminal device may transmit related information of the second terminal to the network device. In some embodiments, if the terminal device selects the second RACH configuration, the terminal device may transmit related information of the first terminal to the network device.

In some embodiments, if the terminal device selects the first RACH configuration, the terminal device may transmit the related information of the first uplink subband to the network device. In some embodiments, if the terminal device selects the second RACH configuration, the terminal device may transmit related information of the non-first uplink subband to the network device. In some embodiments, if the terminal device selects the second RACH configuration, the terminal device may transmit the related information of the first uplink subband to the network device.

The related information of the terminal device may include one or more of the following: an identity (or an index) of the terminal device, a type of the terminal device, or a logical channel identity (logical channel identiy, LCID) corresponding to a type of the terminal device. The related information of the uplink subband may include one or more of the following: a type of the uplink subband, an identity (or an index) of the uplink subband, or an LCID corresponding to the uplink subband.

The process of transmitting, by the terminal device, the related information of the terminal device may include that the terminal device transmits related information of the first terminal or the second terminal. If the terminal device is the first terminal, the terminal device may transmit the related information of the first terminal. If the terminal device is the second terminal, the terminal device may transmit the related information of the second terminal.

The process of transmitting the related information of the uplink subband by the terminal device may include that the terminal device transmits related information of the first uplink subband or the non-first uplink subband. If the terminal device is the first terminal, the terminal device may transmit the related information of the first uplink subband. If the terminal device is the second terminal, the terminal device may transmit the related information of the non-first uplink subband.

The process of transmitting the related information of the uplink subband by the terminal device may include that the terminal device transmits the related information of the uplink subband by using a RACH resource, or the terminal device transmits the related information of the uplink subband by using message content in the random access procedure, or the terminal device transmits the related information of the uplink subband in the random access procedure.

The process of transmitting, by the terminal device, the related information of the terminal device may include that the terminal device transmits the related information of the terminal device by using a RACH resource, or the terminal device transmits the related information of the terminal device by using message content in the random access procedure, or the terminal device transmits the related information of the terminal device in the random access procedure.

In some embodiments, the first RACH configuration may be used by the first terminal. For example, the first RACH configuration may be used by the first terminal to perform one or more of the following operations: selecting a RACH resource; selecting a RACH priority parameter; executing random access; transmitting related information of the first terminal; or transmitting related information of the first uplink subband. For example, if the terminal device is the first terminal, the terminal device may select a RACH resource or a RACH priority parameter based on the first RACH configuration.

In some embodiments, the second RACH configuration may be used by the second terminal. For example, the second RACH configuration may be used by the second terminal to perform one or more of the following operations: selecting a RACH resource; selecting a RACH priority parameter; executing random access; transmitting related information of the second terminal; or transmitting related information of the non-first uplink subband.

In some embodiments, the second RACH configuration may alternatively be used by the first terminal. For example, in a case that a condition is met, the first terminal may alternatively use the second RACH configuration. For example, the condition may include one or more of the following: no resource corresponding to the first RACH configuration being available, no resource corresponding to the first RACH configuration being available in a specific time, or the first terminal being a specific first terminal, no first RACH configuration being configured, or no first RACH configuration being available. For example, in a case of no first RACH configuration being configured or no first RACH configuration being available, the second RACH configuration may alternatively be used by the first terminal to perform one or more of the following operations: selecting a RACH resource; selecting a RACH priority parameter; or executing random access. No first RACH configuration being configured may include that the first terminal does not receive the first RACH configuration. No first RACH configuration being available may include that the terminal device receives the first RACH configuration, but the first RACH configuration cannot be used.

In some embodiments, RACH resources in the first RACH configuration are located in a first time unit and/or a second time unit. The first time unit may include one or more of the following: a subframe of the first uplink subband, a slot of the first uplink subband, a time domain length of the first uplink subband, or a symbol of the first uplink subband. In other words, the first time unit may include one or more of the following: a SBFD subframe, a SBFD slot, a time domain length for SBFD, or a SBFD symbol.

The second time unit may include one or more of the following: a subframe of the non-first uplink subband, a slot of the non-first uplink subband, a symbol of the non-first uplink subband, a time domain length of the non-first uplink subband, an uplink subframe, an uplink slot, or an uplink symbol. Alternatively, the second time unit may include one or more of the following: a non-SBFD subframe, a non-SBFD slot, a non-SBFD symbol, a time domain length for non-SBFD, an uplink subframe, an uplink slot, or an uplink symbol.

Configuration manners of the first RACH configuration and the second RACH configuration are not specifically limited in embodiments of this application. In some embodiments, the first RACH configuration and the second RACH configuration are uniformly configured. Alternatively, a RACH resource in the first RACH configuration and a RACH resource in the second RACH configuration may be uniformly configured, and/or a RACH priority parameter in the first RACH configuration and a RACH priority parameter in the second RACH configuration may be uniformly configured. For example, a preamble in the first RACH configuration and a preamble in the second RACH configuration may be uniformly configured. For another example, an RO in the first RACH configuration and an RO in the second RACH configuration may be uniformly configured. For another example, a RACH priority parameter in the first RACH configuration and a RACH priority parameter in the second RACH configuration may be uniformly configured. In some embodiments, the network device may transmit one piece of configuration information to the terminal device, and the configuration information may be used for configuring both the first RACH configuration and the second RACH configuration.

In some embodiments, the first RACH configuration and the second RACH configuration may be separately configured. Alternatively, a RACH resource in the first RACH configuration and a RACH resource in the second RACH configuration may be separately configured, and/or a RACH priority parameter in the first RACH configuration and a RACH priority parameter in the second RACH configuration may be separately configured. For example, a preamble in the first RACH configuration and a preamble in the second RACH configuration may be separately configured. For another example, an RO in the first RACH configuration and an RO in the second RACH configuration may be separately configured. For another example, a RACH priority parameter in the first RACH configuration and a RACH priority parameter in the second RACH configuration may be separately configured. In some embodiments, the network device may transmit two pieces of configuration information to the terminal device, and the two pieces of configuration information may be configured to configure the first RACH configuration and the second RACH configuration, respectively.

In some embodiments, the first RACH configuration and the second RACH configuration may share a RACH resource. In other words, a RACH resource corresponding to the first RACH configuration is the same as a RACH resource corresponding to the second RACH configuration. For example, a preamble (or a preamble set) corresponding to the first RACH configuration is the same as a preamble (or a preamble set) corresponding to the second RACH configuration. For another example, an RO corresponding to the first RACH configuration is the same as an RO corresponding to the second RACH configuration.

In some embodiments, independent RACH resources may be configured or used in the first RACH configuration and the second RACH configuration. In other words, the first RACH configuration and the second RACH configuration each correspond to one RACH resource. For example, independent preambles or preamble sets may be configured or used in the first RACH configuration and the second RACH configuration. For another example, independent ROs may be configured or used in the first RACH configuration and the second RACH configuration.

In some embodiments, the first RACH configuration may include a two-step random access RACH configuration and/or a four-step random access RACH configuration. The two-step random access RACH configuration is used for the terminal device to execute two-step random access, and the four-step random access RACH configuration is used for the terminal device to execute four-step random access. Configuration manners of the two-step random access RACH configuration and the four-step random access RACH configuration are not specifically limited in embodiments of this application.

In some embodiments, the two-step random access RACH configuration and the four-step random access RACH configuration may be uniformly configured. In other words, a RACH resource in the two-step random access RACH configuration and a RACH resource in the four-step random access RACH configuration may be uniformly configured, and/or a RACH priority parameter in the two-step random access RACH configuration and a RACH priority parameter in the four-step random access RACH configuration may be uniformly configured. In some embodiments, the network device may transmit one piece of configuration information to the terminal device, and the configuration information may be used for configuring both the two-step random access RACH configuration and the four-step random access RACH configuration.

In some embodiments, the two-step random access RACH configuration and the four-step random access RACH configuration may be separately configured. In other words, a RACH resource in the two-step random access RACH configuration and a RACH resource in the four-step random access RACH configuration may be separately configured, and/or a RACH priority parameter in the two-step random access RACH configuration (also referred to as a two-step random access RACH priority parameter) and a RACH priority parameter in the four-step random access RACH configuration (also referred to as a four-step random access RACH priority parameter) may be separately configured. In some embodiments, the network device may transmit two pieces of configuration information to the terminal device, and the two pieces of configuration information may be used for configuring the two-step random access RACH configuration and the four-step random access RACH configuration, respectively.

In some embodiments, the two-step random access RACH configuration and the four-step random access RACH configuration may share a RACH resource. In other words, a RACH resource corresponding to the two-step random access RACH configuration is the same as a RACH resource corresponding to the four-step random access RACH configuration. For example, a preamble (or a preamble set) corresponding to the two-step random access RACH configuration is the same as a preamble (or a preamble set) corresponding to the four-step random access RACH configuration. For another example, an RO corresponding to the two-step random access RACH configuration is the same as an RO corresponding to the four-step random access RACH configuration.

In some embodiments, independent RACH resources may be configured or used in the two-step random access RACH configuration and the four-step random access RACH configuration. In other words, the two-step random access RACH configuration and the four-step random access RACH configuration each correspond to one RACH resource. For example, independent preambles or preamble sets may be configured or used in the two-step random access RACH configuration and the four-step random access RACH configuration. For another example, independent ROs may be configured or used in the two-step random access RACH configuration and the four-step random access RACH configuration.

In some embodiments, the two-step random access RACH priority parameter may be the same as or different from the four-step random access RACH priority parameter. For example, a power adjustment parameter corresponding to two-step random access may be the same as or different from a power adjustment parameter corresponding to four-step random access. For another example, a backoff parameter corresponding to two-step random access may be the same as or different from a backoff parameter corresponding to four-step random access.

It can be learned from the foregoing description that a RACH configuration may include a RACH priority parameter. The RACH priority parameter may include a RACH priority parameter for the first uplink subband and/or a RACH priority parameter for the first terminal. For example, the first RACH configuration may include a RACH priority parameter for the first uplink subband and/or a RACH priority parameter for the first terminal. In some embodiments, the second RACH configuration may include a RACH priority parameter for a non-first uplink subband and/or a RACH priority parameter for a non-first terminal (for example, a legacy terminal).

In some embodiments, compared with the RACH priority parameter corresponding to the second RACH configuration, the RACH priority parameter corresponding to the first RACH configuration may have a higher power adjustment value and/or a lower backoff value. The use of the RACH priority parameter corresponding to the first RACH configuration can enable the terminal device to complete random access as soon as possible, thereby reducing a delay in random access.

A quantity of RACH priority parameters is not specifically limited in embodiments of this application. For example, there may be one or more RACH priority parameters. The one or more RACH priority parameters may be configured by the network device for the terminal device, or may be predefined in a protocol.

The plurality of RACH priority parameters may include one or more of the following: a RACH priority parameter for a specific terminal device, a RACH priority parameter for handover, or a RACH priority parameter for network slicing (slicing). The specific terminal device may include one or more of the following: a mission critical service (mission critical service, MCS) UE, a multimedia priority service (multimedia priority service, MPS) UE, a specific access identity (access identity) UE, or a specific access class (access class) UE. The specific access identity may include an access identity 1 and/or an access identity 2. A terminal whose access identity is 1 may be configured as an MPS user, and a terminal whose access identity is 2 may be configured as an MCS user.

If there are a plurality of RACH priority parameters, the terminal device may select a RACH priority parameter based on second information. In embodiments of this application, the RACH priority parameter selected by the terminal device may be referred to as a target RACH priority parameter. The second information may be indicated by the network device to the terminal device, or the second information may be pre-configured by the network device to the terminal device, or the second information may be predefined in a protocol, or the second information may be selected by the terminal device based on implementation of the terminal device.

In some embodiments, the second information may include a RACH priority parameter used by the terminal device in the plurality of RACH priority parameters. For example, the network device may indicate the target RACH priority parameter directly to the terminal device.

In some embodiments, the second information may include a RACH priority parameter used by the terminal device with a priority in the plurality of RACH priority parameters. For example, the network device may indicate a RACH priority parameter used with a priority to the terminal device. The target RACH priority parameter is a RACH priority parameter used with a priority. There may be one or more RACH priority parameters used with a priority. If there is one RACH priority parameter used with a priority, the terminal device may use the RACH priority parameter as the target RACH priority parameter. If there are a plurality of RACH priority parameters used with a priority, the terminal device may select, randomly or according to an actual requirement, one RACH priority parameter from the plurality of RACH priority parameters as the target RACH priority parameter.

In some embodiments, the second information may include a priority order of the plurality of RACH priority parameters. The terminal device may determine the target RACH priority parameter based on the priority order of the RACH priority parameters. For example, the terminal device may use a RACH priority parameter with a highest priority as the target RACH priority parameter. For another example, the terminal device may alternatively select a RACH priority parameter from RACH priority parameters with higher priority as the target RACH priority parameter.

In some embodiments, the second information may include a RACH priority parameter that is prioritized in the plurality of RACH priority parameters. The target RACH priority parameter is a RACH priority parameter that is prioritized. There may be one or more priority RACH priority parameters that are prioritized. The terminal device may select or determine the target RACH priority parameter from the RACH priority parameters that are prioritized.

The second information may be used separately, or may be used in combination, which is not specifically limited in embodiments of this application.

The second information may include second information corresponding to two-step random access and/or second information corresponding to four-step random access. If a random access mode of the terminal device is two-step random access, the terminal device may select a RACH priority parameter based on the second information corresponding to two-step random access. If a random access mode of the terminal device is four-step random access, the terminal device may select a RACH priority parameter based on the second information corresponding to four-step random access.

In some embodiments, the second information corresponding to two-step random access and the second information corresponding to four-step random access may be uniformly configured. For example, the network device may indicate, to the terminal device by using one piece of indication information, the second information corresponding to two-step random access and the second information corresponding to four-step random access. In some embodiments, the second information corresponding to two-step random access and the second information corresponding to four-step random access may be separately configured. For example, the network device may respectively indicate, to the terminal device by using two pieces of indication information, the second information corresponding to two-step random access and the second information corresponding to four-step random access.

In some embodiments, the second information corresponding to two-step random access may be the same as or different from the second information corresponding to four-step random access.

It may be learned from the foregoing description that the first configuration information may include a first uplink subband configuration. The first uplink subband configuration may include a time domain resource configuration of the first uplink subband and/or a frequency domain resource configuration of the first uplink subband. In some embodiments, the time domain resource of the first uplink subband may include a time domain resource for a second time unit, and the second time unit may include one or more of the following: a slot, a radio frame, a symbol, a subframe, Tc, or the like. For example, the first uplink subband may include an uplink subband for the slot, that is, a time length corresponding to the first uplink subband is the slot, as shown in FIG. 4 to FIG. 6. For another example, the first uplink subband may include an uplink subband for the radio frame, that is, a time length corresponding to the first uplink subband is the radio frame. For another example, the first uplink subband may include an uplink subband for the symbol, that is, a time length corresponding to the first uplink subband is the symbol. For another example, the first uplink subband may include an uplink subband for the subframe, that is, a time length corresponding to the first uplink subband is the subframe.

A configuration manner of the first configuration information is not specifically limited in embodiments of this application. In some embodiments, the first configuration information may be configured in one or more of a periodic manner, a semi-static manner, a static manner, or a dynamic manner.

In some embodiments, the network device may further perform operations such as activation, deactivation, or modification on the first configuration information. For example, the first configuration information may be activated or deactivated or modified in one or more of a dynamic manner, a periodic manner, or a semi-static manner.

There are a plurality of manners for carrying the first configuration information. For example, the first configuration information may be carried in one or more of the following: system information, a system information block (system information block, SIB) message, a master information block (master information block, MIB) message, an RRC message, downlink control information (downlink control information, DCI), a medium access control control element (medium access control control element, MAC CE), or the like. For another example, the network device may configure or modify the first configuration information for the terminal device by using one or more of the following: system information, a SIB message, a MIB message, an RRC message, DCI, a MAC CE, or the like. Optionally, the network device may activate or deactivate or modify the first configuration information for the terminal device by using one or more of the following: system information, a SIB message, a MIB message, an RRC message, DCI, a MAC CE, or the like. The SIB message may be a SIB 1 or a SIB2. Certainly, the SIB message may alternatively be another SIB, such as a new SIB. For example, when the first configuration information is configured, the network device may activate or deactivate or modify the first configuration information by using system information, a SIB message, a MIB message, an RRC message, DCI, a MAC CE, or the like.

For example, in an example in which the first configuration information includes the first uplink subband configuration, the network device may configure one first uplink subband for the terminal device by using an RRC message, activate the first uplink subband by using a MAC CE or DCI, and/or deactivate the first uplink subband by using a MAC CE or DCI.

For example, in an example in which the first configuration information includes the first uplink subband configuration, the network device may configure a plurality of first uplink subbands for the terminal device by using an RRC message. Further, the network device may activate one or more of the plurality of first uplink subbands by using a MAC CE or DCI, and/or deactivate one or more of the plurality of first uplink subbands by using a MAC CE or DCI, and/or indicate a first uplink subband or use an identity (or an index) of a first uplink subband by using a MAC CE or DCI.

In some embodiments, the network device may configure the first configuration information for the terminal device in a paging process, for example, the first configuration information is carried in a paging message; or the network device may configure the first configuration information for the terminal device in a broadcast process; or the network device may configure the first configuration information for the terminal device in a random access process.

The foregoing describes in detail the RACH configuration and the first uplink subband configuration, and the following describes first information.

In some embodiments, the terminal device may transmit first information to the network device. The first information may be carried in one or more of the following: a MSG1, a MSGA, a MSG3, a MSGA physical uplink shared channel (physical uplink shared channel, PUSCH), or a MSG3 PUSCH.

In embodiments of this application, the MSG1 may be a legacy MSG1, or a MSG1 for the first uplink subband, or a MSG1 for the first terminal. In embodiments of this application, the MSGA may be a legacy MSGA, or a MSGA for the first uplink subband, or a MSGA for the first terminal. In embodiments of this application, the MSG3 may be a legacy MSG3, or a MSG3 for the first uplink subband, or a MSG3 for the first terminal. In embodiments of this application, the MSGA PUSCH may be a legacy MSGA PUSCH, or a MSGA PUSCH for the first uplink subband, or a MSGA PUSCH for the first terminal. In embodiments of this application, the MSG3 PUSCH may be a legacy MSG3 PUSCH, or a MSG3 PUSCH for the first uplink subband, or a MSG3 PUSCH for the first terminal.

A manner of determining the first information is not specifically limited in embodiments of this application. In some embodiments, the first information may be determined based on the first configuration information. In other words, the terminal device may determine the first information based on the first configuration information.

In some embodiments, the first information may include one or more of the following: related information of the first terminal, related information of the first uplink subband, a MSG1, a MSGA, a MSGA PUSCH, a MSG3, a MSG3 PUSCH, content carried in a MSGA PUSCH, or content carried in a MSG3. The MSG1 may include a preamble in the MSG1 and/or a RACH resource used by the MSG1. The MSGA may include a preamble in the MSGA and/or a RACH resource used by the MSGA.

The first information is transmitted to the network device, and then the network device may know, as soon as possible, whether the terminal device is a terminal that supports the first uplink subband (or SBFD), so that the terminal device accesses a network as soon as possible, reducing a delay in random access. For example, if the network device determines, based on the first information, that the terminal device is the terminal device that supports the first uplink subband, the network device may process a random access request of the terminal device with a priority, so that the terminal device completes random access as soon as possible.

In some embodiments, the RACH resource used by the MSG1 may be a RACH resource for the first uplink subband and/or a RACH resource for the first terminal. After the terminal device transmits the MSG1 to the network device, the network device may determine, based on the RACH resource used by the MSG1, whether the terminal device is the terminal device that supports the first uplink subband. If the RACH resource used by the MSG1 is the RACH resource for the first uplink subband or the RACH resource for the first terminal, the network device may determine that the terminal device is the terminal device that supports the first uplink subband.

In some embodiments, the MSGA may meet one or more of the following: a used RACH resource being a RACH resource for the first uplink subband, a used RACH resource being a RACH resource for the first terminal, or first indication information being carried. The first indication information is used for indicating related information of the first terminal and/or related information of the first uplink subband. The MSGA may include a MSGA PUSCH and/or a MSGA payload (payload).

After the terminal device transmits the MSGA to the network device, the network device may determine, based on a RACH resource used by the MSGA and/or depending on whether the first indication information is carried in the MSGA, whether the terminal device is the terminal device that supports the first uplink subband. For example, if the RACH resource used by the MSGA is the RACH resource for the first uplink subband and/or the RACH resource for the first terminal, and/or the first indication information is carried in the MSGA, the network device may determine that the terminal device is the terminal device that supports the first uplink subband.

In some embodiments, the terminal device may transmit the MSGA by using a legacy RACH resource, and add the first indication information to the MSGA to indicate whether the terminal device is the terminal device that supports the first uplink subband, or indicate whether the terminal device is the first terminal.

In some embodiments, the MSG3 may include second indication information, and the second indication information may be used for indicating related information of the first terminal and/or related information of the first uplink subband. The MSG3 may include a MSG3 PUSCH. After the terminal device transmits the MSG3 to the network device, the network device may determine, depending on whether the second indication information is carried in the MSG3, whether the terminal device is the terminal device that supports the first uplink subband, or indicate whether the terminal device is the first terminal. For example, if second indication information is carried in the MSG3, the network device may determine that the terminal device is the terminal device that supports the first uplink subband.

In some embodiments, the terminal device may transmit a legacy MSG1 to the network device, and carry a second indication information in the MSG3 to indicate that the terminal device is the terminal device that supports the first uplink subband.

In some embodiments, the terminal device may further select, from the first configuration information according to third information, configuration information required to be used, where the third information includes related information of the terminal device and/or related information of the first uplink subband. It may be learned from the foregoing description that the first configuration information may include a first RACH configuration and a second RACH, and the terminal device may determine, based on the related information of the terminal device and/or the related information of the first uplink subband, whether the configuration information required to be used is the first RACH configuration or the second RACH configuration. For example, if the terminal device is the first terminal and/or the terminal device supports the first uplink subband, a RACH configuration used by the terminal device may be the first RACH configuration. If the terminal device is a second terminal and/or the terminal device does not support the first uplink subband, a RACH configuration used by terminal device may be the second RACH configuration.

In some embodiments, the network device may further transmit a first response message for random access to the terminal device. The first response message may be one or more of a MSG2 (or a RAR), a MSG4, or a MSGB. For example, if the terminal device transmits a MSG1 to the network device, the first response message is the MSG2. If the terminal device transmits a MSG3 to the network device, the first response message is the MSG4. If the terminal device transmits a MSGA to the network device, the first response message is the MSGB.

In some embodiments, the network device may further transmit the first response message for random access to the terminal device to reject (reject) a terminal. For example, the network device may reject the second terminal or the first terminal by using the first response message.

A resource carried in the first response message may be determined based on fourth information; in other words, the network device may determine, based on the fourth information, the resource carried in the first response message. The resource carried in the first response message may include one or more of the following: a resource for a first uplink subband, a resource for a non-first uplink subband, a resource for a first terminal, a resource for a non-first terminal, a resource for a first downlink subband, a resource for a non-first downlink subband, or a legacy response resource. The first downlink subband may be a subband for downlink SBFD. For example, the first downlink subband is located in an uplink time unit, or the first downlink subband is located outside a downlink time unit, or the first downlink subband is located in a flexible time unit.

In some embodiments, in a case that the terminal device meets a first condition, the first response message may meet one or more of the following: a resource carried in the first response message being a resource for SBFD; a resource carried in the first response message being a resource for non-SBFD; a RNTI used for scrambling the first response message being an RNTI for SBFD; or an RNTI used for scrambling the first response message being an RNTI for non-SBFD. For example, when the terminal device meets the first condition, the network device may transmit the first response message to the terminal device by using the resource for SBFD, or the network device may transmit the first response message to the terminal device by using the resource for non-SBFD. For another example, when the terminal device meets the first condition, the network device may scramble the first response message by using the RNTI for SBFD, or the network device may scramble the first response message by using the RNTI for non-SBFD. The RNTI may include at least one or more of the following: a MSGB-RNTI, a RA-RNTI, or a C-RNTI. Certainly, the RNTI may alternatively be another RNTI.

In some embodiments, the resource for SBFD may include one or more of the following: a resource for the first uplink subband, a resource for the first terminal, or a resource for the first downlink subband. The resource for non-SBFD may include one or more of the following: a resource for the non-first uplink subband, a resource for the non-first terminal, or a resource for the non-first downlink subband. The RNTI for SBFD may include one or more of the following: a RNTI for the first terminal, or a RNTI for the first downlink subband. The RNTI for non-SBFD may include one or more of the following: a RNTI for the non-first terminal, or a RNTI for the non-first downlink subband.

In some embodiments, the terminal device that meets the first condition may refer to a terminal device that supports the first uplink subband or SBFD. For example, the first condition may include one or more of the following: belonging to the first terminal; belonging to a specific first terminal; a RACH resource used for executing random access being a RACH resource for the first terminal; a resource used for executing random access being a resource for the first uplink subband; transmitting the related information of the first terminal to the network device; or transmitting the related information of the first uplink subband to the network device. The specific first terminal may include one or more of the following: a terminal that has a specific delay requirement, a terminal that supports a specific logical channel (logical channel, LCH), a terminal that supports a specific service, or a terminal that has a specific access level.

In some embodiments, if the terminal device executes random access by using a RACH resource for the non-first uplink subband, the network device may transmit a second response message to the terminal device. Alternatively, if the terminal device does not meet the first condition, the network device may transmit the second response message to the terminal device.

In some embodiments, a resource carried in the first response message may be the same as or different from a resource carried in the second response message.

In some embodiments, the RNTI used for scrambling the first response message may be the same as or different from a RNTI used for scrambling the second response message. The RNTI may include a RA-RNTI and/or a MSGB-RNTI. Two RNTIs being the same may include that the two RNTIs are calculated in a same manner, and two RNTIs being different from each other may include that two RNTIs are calculated in different manners. For example, offsets (offset) in the two RNTI calculation manners are different from each other, or one of the two RNTIs may be obtained by adding an offset to the other RNTI.

In some embodiments, a control resource set of a PDCCH used for indicating the first response message may be the same as or different from a control resource set of a PDCCH used for indicating the second response message.

In some embodiments, a search space of a PDCCH used for indicating the first response message may be the same as or different from a search space of a PDCCH used for indicating the second response message.

In some embodiments, a detection location of a PDCCH used for indicating the first response message may be the same as or different from a detection location of a PDCCH used for indicating the second response message. The detection location may include a time-frequency resource location.

In some embodiments, in a case that the terminal device meets a second condition, the first response message meets one or more of the following: a resource carried in the first response message being located in a downlink time unit; or a resource carried in the first response message being a resource for a non-first downlink subband.

In some embodiments, the terminal device that meets the second condition may refer to a terminal device that does not support the first uplink subband or SBFD. If the terminal device does not support the first uplink subband or does not support the SBFD, the network device may carry the first response message by using a legacy resource.

In some embodiments, the second condition may include one or more of the following: belonging to a second terminal; belonging to a specific first terminal; a RACH resource used (or selected) for executing random access being a RACH resource for a non-first terminal; a RACH resource used (or selected) for executing random access being a RACH resource corresponding to a second RACH configuration; a first RACH configuration being not identified or selected; or a RACH resource corresponding to a first RACH configuration being not identified or selected. The specific first terminal may include one or more of the following: a terminal that has a specific delay requirement, a terminal that supports a specific LCH, a terminal that supports a specific service, or a terminal that has a specific access level.

In some embodiments, the first terminal may meet one or more of the following: supporting the first uplink subband; receiving the first RACH configuration; selecting or using the first RACH configuration; or carrying indication information in a random access procedure.

In some embodiments, the first terminal may include a terminal that supports the first uplink subband or SBFD.

In some embodiments, the first terminal may include a terminal that receives the first RACH configuration. The process of receiving the first RACH configuration may include one or more of the following: receiving a RACH configuration for the first uplink subband, or receiving a RACH configuration for the first terminal.

In some embodiments, the first terminal may include a terminal that selects or uses the first RACH configuration. The process of selecting or using the first RACH configuration may include one or more of the following: selecting or using a resource corresponding to the first RACH configuration; selecting or using a RACH resource for the first uplink subband; or selecting or using a RACH resource for the first terminal.

In some embodiments, the first terminal may include a terminal that carries indication information in a random access procedure, and the indication information may include related information of the first terminal and/or related information of the first uplink subband. In other words, the first terminal may include a terminal that carries the related information of the first terminal in the random access procedure, and/or a terminal that carries the related information of the first uplink subband in the random access procedure.

In some embodiments, the second terminal may meet one or more of the following: the first uplink subband being not supported; the first RACH configuration being not received; no indication information being carried in a random access procedure; selecting or using the second RACH configuration; or the first RACH configuration being not selected or identified.

In some embodiments, the second terminal may include a terminal that does not support the first uplink subband, a terminal that does not support SBFD, or a legacy terminal.

In some embodiments, the second terminal may include a terminal that fails to receive the first RACH configuration. The process of failing to receive the first RACH configuration may include one or more of the following: failing to receive a RACH configuration for the first uplink subband; or failing to receive a RACH configuration for the first terminal.

In some embodiments, the second terminal may include a terminal that selects or uses the second RACH configuration. The process of selecting or using the second RACH configuration may include one or more of the following: selecting or using a resource corresponding to the second RACH configuration; selecting or using a RACH resource for a non-first uplink subband; or selecting or using a RACH resource for a non-first terminal.

In some embodiments, the second terminal may include a terminal that does not carry indication information in a random access procedure, and the indication information may include related information of the first terminal and/or related information of the first uplink subband. In other words, the second terminal may include a terminal that does not carry the related information of the first terminal in the random access procedure, and/or a terminal that does not carry the related information of the first uplink subband in the random access procedure.

The following describes the solutions in embodiments of this application in detail with reference to two examples. It should be noted that the following two examples are merely described for ease of understanding, and are not intended to limit embodiments of this application.

**Example 1**

1. A terminal device may receive a resource configuration transmitted by a network device. In some embodiments, the resource configuration may include a RACH configuration and a SBFD configuration.

    (1) The RACH configuration may include a preamble and/or an RO.

        (a) Optionally, the RACH configuration may include a RACH configuration for SBFD. The RACH configuration for SBFD may include a preamble and/or RO for SBFD.

Optionally, the RACH configuration for SBFD may be used by the first terminal to select a RACH resource and/or perform a RACH procedure. The first terminal may include a terminal that supports SBFD.

Optionally, the RACH configuration for SBFD may be located in a SBFD subframe, in a SBFD slot, or in a SBFD symbol. Alternatively, the RACH configuration for SBFD may be located in a non-SBFD subframe, or in a non-SBFD slot, or in a non-SBFD symbol. In other words, the RACH configuration for SBFD may be in an uplink subframe, or in an uplink slot, or in an uplink symbol.

Optionally, the RACH configuration for SBFD may include a two-step random access RACH configuration and a four-step random access RACH configuration. The two-step random access RACH configuration and the four-step random access RACH configuration may be uniformly or separately configured.

Optionally, the two-step random access RACH configuration and the four-step random access RACH configuration may share a RACH resource (for example, a preamble and/or an RO), or the two-step random access RACH configuration and the four-step random access RACH configuration configure or use independent RACH resources (for example, preambles and/or ROs).

(b) The RACH configuration may include a RACH configuration for legacy. The RACH configuration for legacy may include a preamble and/or an RO for legacy.

In some embodiments, the RACH configuration for legacy may be used by a second terminal to select a RACH resource and/or perform a RACH procedure. The second terminal may include one or more of the following: a legacy UE, a UE that does not support SBFD, or a UE that fails to receive the RACH configuration for SBFD.

In some embodiments, the RACH configuration for SBFD and the RACH configuration for legacy may share an RO resource or a preamble resource.

In some embodiments, the RACH configuration for SBFD and the RACH configuration for legacy may have independent RO resources or independent preamble resources.

(2) The SBFD configuration may include one or more of the following: a slot or a symbol of an uplink part (or supporting SBFD), or a frequency domain configuration of an uplink part (or supporting SBFD).

(a) Optionally, the SBFD configuration may be for a slot, or for a radio frame, or for a symbol.
(b) Optionally, the SBFD configuration may be a periodic configuration or a semi-static configuration.

(3) The resource configuration may be carried in a SIB message or a MIB message. Optionally, the SIB message may be a SIB1 or a SIB2, or another SIB. The another SIB may be, for example, a new SIB.
2. The terminal device may perform RACH resource selection and/or perform RACH access based on the resource configuration transmitted by the network device. For example, the following aspects may be included.

(1) The terminal device selects a MSG1 or MSG3 or MSGA for SBFD to access a network.

Optionally, the terminal device may be a terminal that supports SBFD.
Optionally, the terminal device may select a resource for SBFD to access the network. The resource for SBFD may include a resource corresponding to the MSG1, and the resource may include a preamble and/or an RO. Alternatively, the terminal device may perform a MSG1 step, and a resource selected in the MSG1 step is the resource for SBFD.
Optionally, the terminal device may select a resource for SBFD to access the network. The resource for SBFD may include a resource corresponding to the MSG1, and the resource may include a preamble and/or an RO. Alternatively, the terminal device may perform a MSGA step, and a resource selected in the MSGA step is the resource for SBFD.
Optionally, the terminal device may indicate, to the network device by carrying indication information in the MSG3, that the terminal device is a terminal device that supports SBFD.

i. Optionally, the terminal device may select a legacy RACH resource to execute the MSG1 step.
ii. Optionally, the network device may transmit a MSG2 to the terminal device by using a non-SBFD downlink subframe or a non-SBFD downlink slot.

Optionally, the terminal device may indicate, to the network device by carrying indication information in a PUSCH of the MSGA, that the terminal device is a terminal device that supports SBFD.

i. Optionally, the terminal device may select a legacy RACH resource to transmit a preamble of the MSGA.
ii. Optionally, the network device may transmit a MSGB to the terminal device by using a SBFD downlink subframe or a SBFD downlink slot.

(2) The network device may transmit a response message to the terminal device. For example, the network device may determine a resource carried in the response message depending on whether the resource used by the terminal device to access the network is a resource for SBFD, or depending on whether the terminal device is a terminal device that supports SBFD.
Optionally, if the resource used by the terminal device to access the network is a resource for SBFD, or the terminal device is a terminal device that supports the SBFD, the network device may respond to the terminal device by using the SBFD DL resource and/or the non-SBFD DL resource.
Optionally, if the resource used by the terminal device to access the network is the resource for SBFD, or the terminal device is the terminal device that supports SBFD, the network device may allow the terminal device to access the network with a priority.
Optionally, if the resource used by the terminal device to access the network is a non-SBFD resource, or the terminal device is a terminal device that does not support SBFD, the network device may respond to the terminal device by using a non-SBFD DL resource.
According to the foregoing technical solution, the network device may learn, as soon as possible, whether the terminal device is the terminal device that supports SBFD, so that the network device processes, with a priority, random access of the terminal device that supports SBFD, thereby reducing a delay in performing random access by the terminal device.

**Example 2**

1. A terminal device receives a resource configuration transmitted by a network device. The resource configuration may include a RACH configuration and a SBFD configuration.

(1) The RACH configuration may include one or more of the following: a preamble, an RO, or a RACH priority parameter.

(a) The RACH configuration may include a RACH configuration for SBFD. The RACH configuration for SBFD may include a RACH priority parameter for SBFD. The RACH priority parameter may include a power adjustment parameter for SBFD and/or a backoff (backoff) parameter for SBFD.

Optionally, the RACH configuration for SBFD may be used by a first terminal to select an appropriate RACH priority parameter (such as a lower backoff value and/or a higher power adjustment value), and/or to perform a RACH procedure. The first terminal may include a terminal that supports SBFD.

Optionally, in a case that a plurality of types of RACH priority parameters are configured, the network device may further configure a selection policy, and the selection policy may include a policy of selecting a RACH priority parameter or a priority order of the plurality of types of RACH priority parameters.

    i. The selection policy may be configured for two-step RACH and four-step RACH uniformly or separately.
    ii. Selection policies for two-step RACH and four-step RACH may be configured in one configuration or in different configurations.
    iii. The plurality of types of RACH priority parameters include a RACH priority parameter for SBFD.

Optionally, the RACH priority parameter for SBFD may be configured for two-step RACH and four-step RACH uniformly or separately.

Optionally, the RACH priority parameters for SBFD configured for two-step RACH and four-step RACH may be in a same configuration or in different configurations.

iv. The plurality of types of RACH priority parameters may include one or more of the following: a RACH priority parameter for a specific UE, a RACH priority parameter for handover, or a RACH priority parameter for network slicing (slicing). The specific UE may include one or more of the following: a MCS UE, a MPS UE, or a UE whose Access Identity is 1 or 2.

(b) The RACH configuration may include a RACH resource, and the RACH resource may include a preamble and/or an RO.

Optionally, the RACH configuration may include a RACH configuration for legacy.

Optionally, the RACH configuration may include a RACH configuration for SBFD. For specific content of the RACH configuration for SBFD, reference may be made to Example 1. Accordingly, for a solution in which a UE selects a RACH resource to access a network, reference may also be made to Example 1. For brevity, details are not described herein again.

Optionally, the RACH resource for legacy may be used by a second terminal to select a RACH resource and/or execute a RACH procedure. The second terminal may include one or more of the following: a legacy UE, a UE that does not support SBFD, or a UE that fails to receive the RACH configuration for SBFD.

(2) The SBFD configuration may include one or more of the following: a slot or a symbol of an uplink part (or supporting SBFD), or a frequency domain configuration of an uplink part (or supporting SBFD).

    (a) Optionally, the SBFD configuration may be for a slot, or for a radio frame, or for a symbol.
    (b) Optionally, the SBFD configuration may be a periodic configuration or a semi-static configuration.

(3) The resource configuration may be carried in a SIB message or a MIB message. Optionally, the SIB message may be a SIB1 or a SIB2, or another SIB. The another SIB may be, for example, a new SIB.

2. The terminal device may use or select a RACH priority parameter and/or execute a RACH procedure based on the resource configuration transmitted by the network device. For example, the following aspects may be included.

    (1) The terminal device selects a RACH resource to access a network. The terminal device may access the network by using a legacy resource or a RACH resource for SBFD.

        i. Optionally, the second terminal may select a legacy resource to access the network and/or perform a RACH procedure. The second terminal may include one or more of the following: a legacy UE, a UE that does not support SBFD, or a UE that fails to receive the RACH configuration for SBFD.
        ii. Optionally, the first terminal may select a RACH resource for SBFD to access a network and/or perform a RACH procedure. The first terminal may include one or more of the following: a UE that supports SBFD, or a UE that obtains a RACH configuration for SBFD.

Optionally, the terminal device may use a MSG1 or MSG3 or MSGA for SBFD to access the network.

Optionally, for a specific execution process of the terminal device, reference may be made to Example 1. For brevity, details are not described herein again.

(2) The terminal device uses and/or selects a RACH priority parameter to execute a RACH procedure. The terminal device may access the network by using a legacy RACH priority parameter or a RACH priority parameter for SBFD.

Optionally, the RACH priority parameter may include a power adjustment parameter for SBFD and/or a backoff (backoff) parameter for SBFD.

Optionally, the second terminal may use or select the legacy RACH priority parameter. The second terminal may include one or more of the following: a legacy UE, a UE that does not support SBFD, or a UE that fails to receive the RACH configuration for SBFD.

Optionally, the first terminal may use or select a RACH priority parameter for SBFD. The first terminal may include one or more of the following: a UE that supports SBFD, or a UE that obtains a RACH configuration for SBFD.

Optionally, the RACH configuration for SBFD may be used by the first terminal to select an appropriate RACH priority parameter (such as a lower backoff value and/or a higher power adjustment value), and/or to perform a RACH procedure.

Optionally, in a case that a plurality of types of (or a plurality of sets of) RACH priority parameters are configured, the terminal device may perform an operation according to the following policy.

i. Optionally, the terminal device may determine, based on the indication information transmitted by the network device, a RACH priority parameter to be used or to be used with a priority, or determine a use priority order of the RACH priority parameters. For example, the network device may configure, for the terminal device, a policy of selecting a RACH priority parameter or a priority order of the plurality of types of RACH priority parameters.
ii. Optionally, the terminal device may select a RACH priority parameter to be used or to be used with a priority, or the terminal device may select a RACH priority parameter according to a use priority order of the RACH priority parameters.
iii. The RACH priority parameter to be used or to be used with a priority by the terminal device or the use priority order of the RACH priority parameters may be specified in a protocol.

(3) The network device responds to the terminal device to complete the RACH procedure.

According to the foregoing technical solution, the terminal device that supports SBFD can perform random access by using a higher power adjustment value and/or a lower backoff value, so that a delay for performing random access can be reduced.

For example, Example 1 and Example 2 may be used alone or in combination.

It should be noted that methods in this specification may be used alone, or may be used in combination with another first subband-related calculation or configuration.

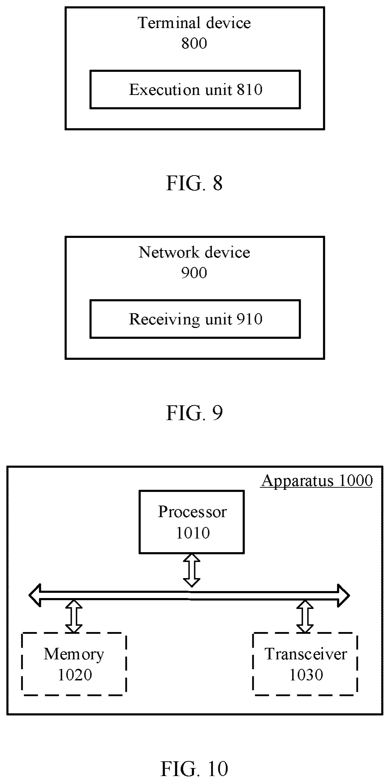

The method embodiments of this application are described above in detail with reference to FIG. 1 to FIG. 7. Apparatus embodiments of this application are described below in detail with reference to FIG. 8 to FIG. 10. It should be understood that the description of the method embodiments corresponds to the description of the apparatus embodiments, and therefore, for a part that is not described in detail, reference may be made to the foregoing method embodiments.

FIG. 8 is a schematic block diagram of a terminal device according to an embodiment of this application. A terminal device 800 shown in FIG. 8 may be any type of terminal device described above. The terminal device 800 may include an execution unit 810.

The execution unit 810 is configured to execute random access by using first information, where the first information is related to a first uplink subband, or the first information is related to a first terminal.

In some embodiments, the first uplink subband meets one or more of the following: being located outside an uplink time unit; being located in a downlink time unit; being located in a flexible time unit; or corresponding to an uplink subband full-duplex mode or an uplink subband full-duplex configuration.

In some embodiments, the terminal device further includes: a receiving unit, configured to receive first configuration information transmitted by a network device, where the first configuration information includes a random access channel RACH configuration and/or a first uplink subband configuration.

In some embodiments, the RACH configuration includes one or more of the following: a RACH resource or a RACH priority parameter, and the RACH resource includes a preamble and/or a RACH occasion RO.

In some embodiments, the RACH configuration includes a first RACH configuration and/or a second RACH configuration, and the first RACH configuration meets one or more of the following: being related to the first terminal, being related to the first uplink subband, or including a RACH configuration for the first uplink subband; and the second RACH configuration meets one or more of the following: being related to a non-first uplink subband, including a RACH configuration for a non-first uplink subband, or including a RACH configuration for an uplink time unit.

In some embodiments, at least one of the first RACH configuration or the second RACH configuration is used for performing one or more of the following: selecting a RACH resource by the terminal device; selecting a RACH priority parameter by the terminal device; executing random access by the terminal device; identifying the terminal device by the network device; transmitting related information of a first terminal by the terminal device; or transmitting related information of the first uplink subband by the terminal device.

In some embodiments, the process of transmitting the related information of the first uplink subband by the terminal device includes: transmitting, by the terminal device, the related information of the first uplink subband by using the RACH resource or in a random access procedure; and/or the process of transmitting the related information of the first terminal by the terminal device includes: transmitting, by the terminal device, the related information of the first terminal by using the RACH resource or in a random access procedure.

In some embodiments, at least one of the first RACH configuration or the second RACH configuration is used by the first terminal.

In some embodiments, the second RACH configuration is used by the first terminal in a case that there is no first RACH configuration or no available first RACH configuration.

In some embodiments, the second RACH configuration is used by a second terminal.

In some embodiments, a RACH resource in the first RACH configuration is located in a first time unit and/or a second time unit, and the first time unit includes one or more of the following: a subframe of the first uplink subband, a slot of the first uplink subband, or a symbol of the first uplink subband; and the second time unit includes one or more of the following: a subframe of the non-first uplink subband, a slot of the non-first uplink subband, a symbol of the non-first uplink subband, an uplink subframe, an uplink slot, or an uplink symbol.

In some embodiments, the first RACH configuration and the second RACH configuration meet one or more of the following: the first RACH configuration and the second RACH configuration being uniformly configured; the first RACH configuration and the second RACH configuration being separately configured; the first RACH configuration and the second RACH configuration sharing a RACH resource; or independent RACH resources being configured or used in the first RACH configuration and the second RACH configuration.

In some embodiments, the first RACH configuration includes a two-step random access RACH configuration and/or a four-step random access RACH configuration.

In some embodiments, the two-step random access RACH configuration and the four-step random access RACH configuration meet one or more of the following: the two-step random access RACH configuration and the four-step random access RACH configuration being uniformly configured; the two-step random access RACH configuration and the four-step random access RACH configuration being separately configured; the two-step random access RACH configuration and the four-step random access RACH configuration sharing a RACH resource; or the two-step random access RACH configuration and the four-step random access RACH configuration having independent RACH resources.

In some embodiments, the RACH priority parameter includes a power adjustment parameter and/or a backoff parameter.

In some embodiments, the RACH priority parameter includes a RACH priority parameter for the first uplink subband and/or a RACH priority parameter for the first terminal.

In some embodiments, the RACH priority parameter includes a two-step random access RACH priority parameter and/or a four-step random access RACH priority parameter.

In some embodiments, the two-step random access RACH priority parameter and the four-step random access RACH priority parameter meet one or more of the following: the two-step random access RACH priority parameter and the four-step random access RACH priority parameter being uniformly configured; the two-step random access RACH priority parameter and the four-step random access RACH priority parameter being separately configured; the two-step random access RACH priority parameter being the same as the four-step random access RACH priority parameter; or the two-step random access RACH priority parameter being different from the four-step random access RACH priority parameter.

In some embodiments, there are a plurality of RACH priority parameters, and the terminal device further includes: a selecting unit, configured to select a RACH priority parameter based on second information. The second information includes one or more of the following: a RACH priority parameter used by the terminal device in the plurality of RACH priority parameters; a RACH priority parameter used by the terminal device with a priority in the plurality of RACH priority parameters; a priority order of the plurality of RACH priority parameters; or a RACH priority parameter that is prioritized in the plurality of RACH priority parameters.

In some embodiments, second information corresponding to two-step random access and second information corresponding to four-step random access meet one or more of the following: the second information corresponding to the two-step random access and the second information corresponding to the four-step random access being uniformly configured; the second information corresponding to the two-step random access and the second information corresponding to the four-step random access being separately configured; the second information corresponding to the two-step random access being the same as the second information corresponding to the four-step random access; or the second information corresponding to the two-step random access being different from the second information corresponding to the four-step random access.

In some embodiments, the second information is indicated by the network device, or pre-configured by the network device, or selected by the terminal device, or predefined in a protocol.

In some embodiments, the plurality of RACH priority parameters include one or more of the following: a RACH priority parameter for a specific terminal device, a RACH priority parameter for handover, or a RACH priority parameter for network slicing.

In some embodiments, the first uplink subband configuration includes a time domain resource configuration of the first uplink subband and/or a frequency domain resource configuration of the first uplink subband.

In some embodiments, the time domain resource of the first uplink subband includes a time domain resource for a second time unit, and the second time unit includes one or more of the following: a slot, a radio frame, or a symbol.

In some embodiments, the first configuration information is configured in one or more of a periodic manner, a semi-static manner, a static manner, or a dynamic manner; and/or the first configuration information is activated or deactivated or modified in one or more of a dynamic manner, a periodic manner, or a semi-static manner.

In some embodiments, the first configuration information is carried in one or more of the following: system information, a system information block SIB message, a master information block MIB message, a radio resource control RRC message, downlink control information DCI, or a medium access control control element MAC CE.

In some embodiments, the terminal device further includes: a transmitting unit, configured to transmit the first information to the network device.

In some embodiments, the first information is carried in one or more of the following: a MSG1, a MSGA, a MSG3, a MSGA physical uplink shared channels PUSCH, or a MSG3 PUSCH.

In some embodiments, the terminal device further includes: a determining unit, configured to determine the first information based on the first configuration information.

In some embodiments, the first information includes one or more of the following: related information of the first terminal, related information of the first uplink subband, a MSG1, a MSGA, a MSGA PUSCH, a MSG3, a MSG3 PUSCH, content carried in a MSGA PUSCH, or content carried in a MSG3.

In some embodiments, the MSG1 includes a MSG1 for the first uplink subband and/or a MSG1 for the first terminal; and/or the MSGA includes a MAGA for the first terminal and/or a MSGA for the first uplink subband; and/or the MSG3 includes a MAG3 for the first terminal and/or a MSG3 for the first uplink subband; and/or the MSGA PUSCH includes a MSGA PUSCH for the first terminal and/or a MSGA PUSCH for the first uplink subband; and/or the MSG3 PUSCH includes a MSG3 PUSCH for the first terminal and/or a MSG3 PUSCH for the first uplink subband.

In some embodiments, the terminal device further includes a selection unit, configured to select, from the first configuration information based on third information, configuration information required to be used, where the third information includes related information of the terminal device and/or related information of the first uplink subband.

In some embodiments, the RACH resource used by the MSG1 is a RACH resource for the first uplink subband or a RACH resource for the first terminal.

In some embodiments, the MSGA or the MSGA PUSCH or a MSGA payload meets one or more of the following: a used RACH resource being a RACH resource for the first uplink subband, a used RACH resource being a RACH resource for the first terminal, or first indication information being carried, where the first indication information is used for indicating related information of the first terminal and/or related information of the first uplink subband.

In some embodiments, the MSG3 or the MSG3 PUSCH includes second indication information, and the second indication information is used for indicating related information of the first terminal and/or related information of the first uplink subband.

In some embodiments, the terminal device further includes a receiving unit, configured to receive a first response message for random access transmitted by the network device.

In some embodiments, a resource carried in the first response message is determined based on fourth information, and the fourth information includes one or more of the following: related information of the terminal device, related information of the first uplink subband, or a RACH resource used by the terminal device to execute random access.

In some embodiments, in a case that the terminal device meets a first condition, the first response message meets one or more of the following: a resource carried in the first response message being a resource for the first uplink subband; a resource carried in the first response message being a resource for the first terminal; a resource carried in the first response message being a resource for a first downlink subband; a resource carried in the first response message being a resource for a non-first downlink subband; a radio network temporary identifier RNTI used for scrambling the first response message being an RNTI for a first downlink subband; an RNTI used for scrambling the first response message being an RNTI for a non-first downlink subband; an RNTI used for scrambling the first response message being an RNTI for the first terminal; or an RNTI used for scrambling the first response message being an RNTI for a non-first terminal. The first condition includes one or more of the following: belonging to the first terminal; a RACH resource used for executing random access being a RACH resource for the first terminal; a RACH resource used for executing random access being a RACH resource for the first uplink subband; transmitting the related information of the first terminal to the network device; or transmitting the related information of the first uplink subband to the network device.

In some embodiments, a resource carried in the first response message is the same as or different from a resource carried in a second response message; and/or the RNTI used for scrambling the first response message is the same as or different from an RNTI used for scrambling a second response message; and/or a control resource set of a physical downlink control channel PDCCH used for indicating the first response message is the same as or different from a control resource set of a PDCCH used for indicating a second response message; and/or a search space of a PDCCH used for indicating the first response message is the same as or different from a search space of a PDCCH used for indicating a second response message; and/or a detection location of a PDCCH used for indicating the first response message is the same as or different from a detection location of a PDCCH used for indicating a second response message. The second response message includes a response message for a RACH resource of a non-first uplink subband.

In some embodiments, in a case that the terminal device meets a second condition, the first response message meets one or more of the following: a resource carried in the first response message being located in a downlink time unit; or a resource carried in the first response message being a resource for a non-first downlink subband. The second condition includes one or more of the following: belonging to a second terminal; a RACH resource used for executing random access being a RACH resource for a non-first terminal; no terminal information or subband information being carried in a random access procedure; a RACH resource used for executing random access being a RACH resource for a non-first uplink subband; a RACH resource selected or used for executing random access being a RACH resource corresponding to a second RACH configuration; a first RACH configuration being not identified or selected; or a RACH resource corresponding to a first RACH configuration being not identified or selected.

In some embodiments, the first terminal meets one or more of the following: supporting the first uplink subband; receiving a RACH configuration for the first uplink subband; selecting or using a first RACH configuration or a resource corresponding to a first RACH configuration; selecting or using a RACH resource of the first uplink subband; carrying related information of the first terminal in a random access procedure; carrying related information of the first uplink subband in a random access procedure; receiving a RACH configuration for the first terminal; or selecting or using a RACH resource of the first terminal.

In some embodiments, the second terminal meets one or more of the following: the first uplink subband being not supported; no RACH configuration for the first uplink subband being received; selecting or using a RACH resource of a non-first uplink subband; related information of the first terminal being not carried in a random access procedure; related information of the first uplink subband being not carried in a random access procedure; no RACH configuration for the first terminal being received; selecting or using a RACH resource for a non-first terminal; or a first RACH configuration or a resource corresponding to a first RACH configuration being not selected or identified.

FIG. 9 is a schematic block diagram of a network device according to an embodiment of this application. A network device 900 shown in FIG. 9 may be any type of network device described above. The network device 900 may include a receiving unit 910.

The receiving unit 910 is configured to receive a first message transmitted by a terminal device, where the first message is used for random access, the first message is determined based on first information, and the first information is related to a first uplink subband or the first information is related to a first terminal.

In some embodiments, the first uplink subband meets one or more of the following: being located outside an uplink time unit; being located in a downlink time unit; being located in a flexible time unit; or corresponding to an uplink subband full-duplex mode or an uplink subband full-duplex configuration.

In some embodiments, the network device further includes: a transmitting unit, configured to transmit first configuration information to the terminal device, where the first configuration information includes a random access channel RACH configuration and/or a first uplink subband configuration.

In some embodiments, the RACH configuration includes one or more of the following: a RACH resource or a RACH priority parameter, and the RACH resource includes a preamble and/or a RACH occasion RO.

In some embodiments, the RACH configuration includes a first RACH configuration and/or a second RACH configuration, and the first RACH configuration meets one or more of the following: being related to the first terminal, being related to the first uplink subband, or including a RACH configuration for the first uplink subband. The second RACH configuration meets one or more of the following: being related to a non-first uplink subband, including a RACH configuration for a non-first uplink subband, or including a RACH configuration for an uplink time unit.

In some embodiments, at least one of the first RACH configuration or the second RACH configuration is used for performing one or more of the following: selecting a RACH resource by the terminal device; selecting a RACH priority parameter by the terminal device; executing random access by the terminal device; identifying the terminal device by the network device; transmitting related information of a first terminal by the terminal device; or transmitting related information of the first uplink subband by the terminal device.

In some embodiments, the process of transmitting the related information of the first uplink subband by the terminal device includes: carrying, by the terminal device, the related information of the first uplink subband by using the RACH resource or in a random access procedure; and/or the process of transmitting the related information of the first terminal by the terminal device includes: transmitting, by the terminal device, the related information of the first terminal by using the RACH resource or in a random access procedure.

In some embodiments, at least one of the first RACH configuration or the second RACH configuration is used by the first terminal.

In some embodiments, the second RACH configuration is used by the first terminal in a case that there is no first RACH configuration or no available first RACH configuration.

In some embodiments, the second RACH configuration is used by a second terminal.

In some embodiments, a RACH resource in the first RACH configuration is located in a first time unit and/or a second time unit, and the first time unit includes one or more of the following: a subframe of the first uplink subband, a slot of the first uplink subband, or a symbol of the first uplink subband; and the second time unit includes one or more of the following: a subframe of the non-first uplink subband, a slot of the non-first uplink subband, a symbol of the non-first uplink subband, an uplink subframe, an uplink slot, or an uplink symbol.

In some embodiments, the first RACH configuration and the second RACH configuration meet one or more of the following: the first RACH configuration and the second RACH configuration being uniformly configured; the first RACH configuration and the second RACH configuration being separately configured; the first RACH configuration and the second RACH configuration sharing a RACH resource; or independent RACH resources being configured or used in the first RACH configuration and the second RACH configuration.

In some embodiments, the first RACH configuration includes a two-step random access RACH configuration and/or a four-step random access RACH configuration.

In some embodiments, the two-step random access RACH configuration and the four-step random access RACH configuration meet one or more of the following: the two-step random access RACH configuration and the four-step random access RACH configuration being uniformly configured; the two-step random access RACH configuration and the four-step random access RACH configuration being separately configured; the two-step random access RACH configuration and the four-step random access RACH configuration sharing a RACH resource; or the two-step random access RACH configuration and the four-step random access RACH configuration having independent RACH resources.

In some embodiments, the RACH priority parameter includes a power adjustment parameter and/or a backoff parameter.

In some embodiments, the RACH priority parameter includes a RACH priority parameter for the first uplink subband and/or a RACH priority parameter for the first terminal.

In some embodiments, the RACH priority parameter includes a two-step random access RACH priority parameter and/or a four-step random access RACH priority parameter.

In some embodiments, the two-step random access RACH priority parameter and the four-step random access RACH priority parameter meet one or more of the following: the two-step random access RACH priority parameter and the four-step random access RACH priority parameter being uniformly configured; the two-step random access RACH priority parameter and the four-step random access RACH priority parameter being separately configured; the two-step random access RACH priority parameter being the same as the four-step random access RACH priority parameter; or the two-step random access RACH priority parameter being different from the four-step random access RACH priority parameter.

In some embodiments, there are a plurality of RACH priority parameters, and a RACH priority parameter used in the plurality of RACH priority parameters is determined based on second information. The second information includes one or more of the following: a RACH priority parameter used by the terminal device in the plurality of RACH priority parameters; a RACH priority parameter used by the terminal device with a priority in the plurality of RACH priority parameters; a priority order of the plurality of RACH priority parameters; or a RACH priority parameter that is prioritized in the plurality of RACH priority parameters.

In some embodiments, second information corresponding to two-step random access and second information corresponding to four-step random access meet one or more of the following: the second information corresponding to the two-step random access and the second information corresponding to the four-step random access being uniformly configured; the second information corresponding to the two-step random access and the second information corresponding to the four-step random access being separately configured; the second information corresponding to the two-step random access being the same as the second information corresponding to the four-step random access; or the second information corresponding to the two-step random access being different from the second information corresponding to the four-step random access.

In some embodiments, the second information is indicated by the network device, or pre-configured by the network device, or selected by the terminal device, or predefined in a protocol.

In some embodiments, the plurality of RACH priority parameters include one or more of the following: a RACH priority parameter for a specific terminal device, a RACH priority parameter for handover, or a RACH priority parameter for network slicing.

In some embodiments, the first uplink subband configuration includes a time domain resource configuration of the first uplink subband and/or a frequency domain resource configuration of the first uplink subband.

In some embodiments, the time domain resource of the first uplink subband includes a time domain resource for a second time unit, and the second time unit includes one or more of the following: a slot, a radio frame, or a symbol.

In some embodiments, the first configuration information is configured in one or more of a periodic manner, a semi-static manner, a static manner, or a dynamic manner; and/or the first configuration information is activated or deactivated or modified in one or more of a dynamic manner, a periodic manner, or a semi-static manner.

In some embodiments, the first configuration information is carried in one or more of the following: system information, a system information block SIB message, a master information block MIB message, a radio resource control RRC message, downlink control information DCI, or a medium access control control element MAC CE.

In some embodiments, the network device further includes: a receiving unit, configured to receive the first information transmitted by the terminal device.

In some embodiments, the first information is carried in one or more of the following: a MSGI, a MSGA, a MSG3, a MSGA physical uplink shared channels PUSCH, or a MSG3 PUSCH.

In some embodiments, the first information is determined based on the first configuration information.

In some embodiments, the first information includes one or more of the following: related information of the first terminal, related information of the first uplink subband, a MSG1, a MSGA, a MSGA PUSCH, a MSG3, a MSG3 PUSCH, content carried in a MSGA PUSCH, or content carried in a MSG3.

In some embodiments, the MSG1 includes a MSG1 for the first uplink subband and/or a MSG1 for the first terminal; and/or the MSGA includes a MAGA for the first terminal and/or a MSGA for the first uplink subband; and/or the MSG3 includes a MAG3 for the first terminal and/or a MSG3 for the first uplink subband; and/or the MSGA PUSCH includes a MSGA PUSCH for the first terminal and/or a MSGA PUSCH for the first uplink subband; and/or the MSG3 PUSCH includes a MSG3 PUSCH for the first terminal and/or a MSG3 PUSCH for the first uplink subband.

In some embodiments, configuration information required to be used in the first configuration information is determined based on third information, and the third information includes related information of the terminal device and/or related information of the first uplink subband.

In some embodiments, the RACH resource used by the MSG1 is a RACH resource for the first uplink subband or a RACH resource for the first terminal.

In some embodiments, the MSGA or the MSGA PUSCH or a MSGA payload meets one or more of the following: a used RACH resource being a RACH resource for the first uplink subband, a used RACH resource being a RACH resource for the first terminal, or first indication information being carried, where the first indication information is used for indicating related information of the first terminal and/or related information of the first uplink subband.

In some embodiments, the MSG3 or the MSG3 PUSCH includes second indication information, and the second indication information is used for indicating related information of the first terminal and/or related information of the first uplink subband.

In some embodiments, the network device further includes: transmitting, by the network device, a first response message for random access to the terminal device.

In some embodiments, a resource carried in the first response message is determined based on fourth information, and the fourth information includes one or more of the following: related information of the terminal device, related information of the first uplink subband, or a RACH resource used by the terminal device to execute random access.

In some embodiments, in a case that the terminal device meets a first condition, the first response message meets one or more of the following: a resource carried in the first response message being a resource for the first uplink subband; a resource carried in the first response message being a resource for the first terminal; a resource carried in the first response message being a resource for a first downlink subband; a resource carried in the first response message being a resource for a non-first downlink subband; a radio network temporary identifier RNTI used for scrambling the first response message being an RNTI for a first downlink subband; an RNTI used for scrambling the first response message being an RNTI for a non-first downlink subband; an RNTI used for scrambling the first response message being an RNTI for the first terminal; or an RNTI used for scrambling the first response message being an RNTI for a non-first terminal. The first condition includes one or more of the following: belonging to the first terminal; a RACH resource used for executing random access being a RACH resource for the first terminal; a RACH resource used for executing random access being a RACH resource for the first uplink subband; transmitting the related information of the first terminal to the network device; or transmitting the related information of the first uplink subband to the network device.

In some embodiments, a resource carried in the first response message is the same as or different from a resource carried in a second response message; and/or the RNTI used for scrambling the first response message is the same as or different from an RNTI used for scrambling a second response message; and/or a control resource set of a physical downlink control channel PDCCH used for indicating the first response message is the same as or different from a control resource set of a PDCCH used for indicating a second response message; and/or a search space of a PDCCH used for indicating the first response message is the same as or different from a search space of a PDCCH used for indicating a second response message; and/or a detection location of a PDCCH used for indicating the first response message is the same as or different from a detection location of a PDCCH used for indicating a second response message. The second response message includes a response message for a RACH resource of a non-first uplink subband.

In some embodiments, in a case that the terminal device meets a second condition, the first response message meets one or more of the following: a resource carried in the first response message being located in a downlink time unit; or a resource carried in the first response message being a resource for a non-first downlink subband. The second condition includes one or more of the following: belonging to a second terminal; a RACH resource used for executing random access being a RACH resource for a non-first terminal; no terminal information or subband information being carried in a random access procedure; a RACH resource used for executing random access being a RACH resource for a non-first uplink subband; a RACH resource selected or used for executing random access being a RACH resource corresponding to a second RACH configuration; a first RACH configuration being not identified or selected; or a RACH resource corresponding to a first RACH configuration being not identified or selected.

In some embodiments, the first terminal meets one or more of the following: supporting the first uplink subband; receiving a RACH configuration for the first uplink subband; selecting or using a first RACH configuration or a resource corresponding to a first RACH configuration; selecting or using a RACH resource of the first uplink subband; carrying related information of the first terminal in a random access procedure; carrying related information of the first uplink subband in a random access procedure; receiving a RACH configuration for the first terminal; or selecting or using a RACH resource of the first terminal.

In some embodiments, the second terminal meets one or more of the following: the first uplink subband being not supported; no RACH configuration for the first uplink subband being received; selecting or using a RACH resource of a non-first uplink subband; related information of the first terminal being not carried in a random access procedure; related information of the first uplink subband being not carried in a random access procedure; no RACH configuration for the first terminal being received; selecting or using a RACH resource for a non-first terminal; or a first RACH configuration or a resource corresponding to a first RACH configuration being not selected or identified.

FIG. 10 is a schematic structural diagram of a communications apparatus according to an embodiment of this application. Dashed lines in FIG. 10 indicate that a unit or module is optional. The apparatus 1000 may be configured to implement the methods described in the foregoing method embodiments. The apparatus 1000 may be a chip, a terminal device, or a network device.

The apparatus 1000 may include one or more processors 1010. The processor 1010 may support the apparatus 1000 in implementing the methods described in the foregoing method embodiments. The processor 1010 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1000 may further include one or more memories 1020. The memory 1020 stores a program, and the program may be executed by the processor 1010, to cause the processor 1010 to execute the methods described in the foregoing method embodiments. The memory 1020 may be separated from or integrated into the processor 1010.

The apparatus 1000 may further include a transceiver 1030. The processor 1010 may communicate with another device or chip by using the transceiver 1030. For example, the processor 1010 may transmit data to and receive data from another device or chip by using the transceiver 1030.

An embodiment of this application further provides a computer-readable storage medium for storing a program. The computer-readable storage medium may be applied to a terminal or a network device provided in embodiments of this application, and the program causes a computer to execute the methods performed by the terminal or the network device in various embodiments of this application.

An embodiment of this application further provides a computer program product. The computer program product includes a program. The computer program product may be applied to the terminal or the network device provided in embodiments of this application, and the program causes a computer to execute the methods performed by the terminal or the network device in various embodiments of this application.

An embodiment of this application further provides a computer program. The computer program may be applied to the terminal or the network device provided in embodiments of this application, and the computer program causes the computer to execute the methods performed by the terminal or the network device in embodiments of this application.

It should be understood that, in embodiments of this application, "B that is corresponding to A" means that B is associated with A, and B may be determined based on A. However, it should be further understood that, determining B based on A does not mean determining B based only on A, but instead, B may be determined based on A and/or other information.

It should be understood that, in this specification, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

It should be understood that, in embodiments of this application, sequence numbers of the foregoing processes do not mean execution sequences. The execution sequences of the processes should be determined based on functions and internal logic of the processes, and should not be construed as any limitation on the implementation processes of the embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may be or may not be physically separate, and parts displayed as units may be or may not be physical units, and may be at one location, or may be distributed on a plurality of network elements. Some or all of the units may be selected according to actual requirements to achieve the objective of the solutions of embodiments.

In addition, function units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. A wireless communication method, comprising:
   executing, by a terminal device, random access by using first information, wherein the first information is related to a first uplink subband, or the first information is related to a first terminal.

2. The method according to claim 1, wherein the first uplink subband meets one or more of following :

   being located outside an uplink time unit;
   being located in a downlink time unit;
   being located in a flexible time unit; or
   corresponding to an uplink subband full-duplex mode or an uplink subband full-duplex configuration.

3. The method according to claim 1 or 2, wherein the method further comprises:
   receiving, by the terminal device, first configuration information transmitted by a network device, wherein the first configuration information comprises a random access channel RACH configuration and/or a first uplink subband configuration.

4. The method according to claim 3, wherein the RACH configuration comprises one or more of following: a RACH resource or a RACH priority parameter, and the RACH resource comprises a preamble and/or a RACH occasion RO.

5. The method according to claim 4, wherein the RACH configuration comprises a first RACH configuration and/or a second RACH configuration, and the first RACH configuration meets one or more of following: being related to the first terminal, being related to the first uplink subband, or comprising a RACH configuration for the first uplink subband; and the second RACH configuration meets one or more of following: being related to a non-first uplink subband, comprising a RACH configuration for a non-first uplink subband, or comprising a RACH configuration for an uplink time unit.

6. The method according to claim 5, wherein at least one of the first RACH configuration or the second RACH configuration is used for performing one or more of following:

   selecting a RACH resource by the terminal device;
   selecting a RACH priority parameter by the terminal device;
   executing random access by the terminal device;
   identifying the terminal device by the network device;
   transmitting related information of the first terminal by the terminal device; or
   transmitting related information of the first uplink subband by the terminal device.

7. The method according to claim 6, wherein the transmitting the related information of the first uplink subband by the terminal device comprises: transmitting, by the terminal device, the related information of the first uplink subband by using the RACH resource or in a random access procedure; and/or
   wherein the transmitting the related information of the first terminal by the terminal device comprises: transmitting, by the terminal device, the related information of the first terminal by using the RACH resource or in a random access procedure.

8. The method according to claim 6 or 7, wherein at least one of the first RACH configuration or the second RACH configuration is used for the first terminal.

9. The method according to claim 6 or 7, wherein the second RACH configuration is used by the first terminal in a case that there is no first RACH configuration or no available first RACH configuration.

10. The method according to claim 6 or 7, wherein the second RACH configuration is used for a second terminal.

11. The method according to any one of claims 5 to 10, wherein a RACH resource in the first RACH configuration is located in a first time unit and/or a second time unit;

   the first time unit comprises one or more of following: a subframe of the first uplink subband, a slot of the first uplink subband, or a symbol of the first uplink subband; and
   the second time unit comprises one or more of following: a subframe of the non-first uplink subband, a slot of the non-first uplink subband, a symbol of the non-first uplink subband, an uplink subframe, an uplink slot, or an uplink symbol.

12. The method according to any one of claims 5 to 11, wherein the first RACH configuration and the second RACH configuration meet one or more of following:

   the first RACH configuration and the second RACH configuration being uniformly configured;
   the first RACH configuration and the second RACH configuration being separately configured;
   the first RACH configuration and the second RACH configuration sharing a RACH resource; or
   independent RACH resources being configured or used in the first RACH configuration and the second RACH configuration.

13. The method according to any one of claims 5 to 12, wherein the first RACH configuration comprises a two-step random access RACH configuration and/or a four-step random access RACH configuration.

14. The method according to claim 13, wherein the two-step random access RACH configuration and the four-step random access RACH configuration meet one or more of following:

   the two-step random access RACH configuration and the four-step random access RACH configuration being uniformly configured;

the two-step random access RACH configuration and the four-step random access RACH configuration being separately configured;

the two-step random access RACH configuration and the four-step random access RACH configuration sharing a RACH resource; or

the two-step random access RACH configuration and the four-step random access RACH configuration having independent RACH resources.

15. The method according to any one of claims 4 to 14, wherein the RACH priority parameter comprises a power adjustment parameter and/or a backoff parameter.

16. The method according to any one of claims 4 to 15, wherein the RACH priority parameter comprises a RACH priority parameter for a first uplink subband and/or a RACH priority parameter for a first terminal.

17. The method according to any one of claims 4 to 16, wherein the RACH priority parameter comprises a two-step random access RACH priority parameter and/or a four-step random access RACH priority parameter.

18. The method according to claim 17, wherein the two-step random access RACH priority parameter and the four-step random access RACH priority parameter meet one or more of following:

the two-step random access RACH priority parameter and the four-step random access RACH priority parameter being uniformly configured;

the two-step random access RACH priority parameter and the four-step random access RACH priority parameter are separately configured;

the two-step random access RACH priority parameter being the same as the four-step random access RACH priority parameter; or

the two-step random access RACH priority parameter being different from the four-step random access RACH priority parameter.

19. The method according to any one of claims 4 to 18, wherein a quantity of the RACH priority parameter is greater than one, and the method further comprises:

selecting, by the terminal device, a RACH priority parameter based on second information, wherein the second information comprises one or more of following:

a RACH priority parameter used by the terminal device in a plurality of RACH priority parameters;

a RACH priority parameter used by the terminal device with a priority in the plurality of RACH priority parameters;

a priority order of the plurality of RACH priority parameters; or

a RACH priority parameter that is prioritized in the plurality of RACH priority parameters.

20. The method according to claim 19, wherein second information corresponding to two-step random access and second information corresponding to four-step random access meet one or more of following:

the second information corresponding to the two-step random access and the second information corresponding to the four-step random access being uniformly configured;

the second information corresponding to the two-step random access and the second information corresponding to the four-step random access being separately configured;

the second information corresponding to the two-step random access being the same as the second information corresponding to the four-step random access; or

the second information corresponding to the two-step random access being different from the second information corresponding to the four-step random access.

21. The method according to claim 19 or 20, wherein the second information is indicated by the network device, or pre-configured by the network device, or selected by the terminal device, or predefined in a protocol.

22. The method according to any one of claims 19 to 21, wherein the plurality of RACH priority parameters comprise one or more of following: a RACH priority parameter for a specific terminal device, a RACH priority parameter for handover, or a RACH priority parameter for network slicing.

23. The method according to any one of claims 3 to 22, wherein the first uplink subband configuration comprises a time domain resource configuration of the first uplink subband and/or a frequency domain resource configuration of the first uplink subband.

24. The method according to claim 23, wherein a time domain resource of the first uplink subband comprises a time domain resource for a second time unit, and the second time unit comprises one or more of a slot, a radio frame, or a symbol.

25. The method according to any one of claims 3 to 24, wherein the first configuration information is configured in one or more of a periodic manner, a semi-static manner, a static manner, or a dynamic manner; and/or
the first configuration information is activated or deactivated or modified in one or more of a dynamic manner, a periodic manner, or a semi-static manner.

26. The method according to any one of claims 3 to 25, wherein the first configuration information is carried in one or more of following: system information, a system information block SIB message, a master information block MIB message, a radio resource control RRC message, downlink control information DCI, or a medium access control control element MAC CE.

27. The method according to any one of claims 1 to 26, wherein the method further comprises:
transmitting, by the terminal device, the first information to the network device.

28. The method according to claim 27, wherein the first information is carried in one or more of following: a MSG1, a MSGA, a MSG3, a MSGA physical uplink shared channel PUSCH, or a MSG3 PUSCH.

29. The method according to any one of claims 3 to 28, wherein the method further comprises:
determining, by the terminal device, the first information based on the first configuration information.

30. The method according to claim 29, wherein the first information comprises one or more of following: related information of the first terminal, related information of the first uplink subband, a MSG1, a MSGA, a MSGA PUSCH, a MSG3, a MSG3 PUSCH, content carried in a MSGA PUSCH, or content carried in a MSG3.

31. The method according to claim 28 or 30, wherein the MSG1 comprises a MSG1 for the first uplink subband and/or a MSG1 for the first terminal; and/or

the MSGA comprises a MAGA for the first terminal and/or a MSGA for the first uplink subband; and/or
the MSG3 comprises a MAG3 for the first terminal and/or a MSG3 for the first uplink subband; and/or
the MSGA PUSCH comprises a MSGA PUSCH for the first terminal and/or a MSGA PUSCH for the first uplink subband; and/or
the MSG3 PUSCH comprises a MSG3 PUSCH for the first terminal and/or a MSG3 PUSCH for the first uplink subband.

32. The method according to any one of claims 3 to 31, wherein the method further comprises:
selecting, by the terminal device from the first configuration information, configuration information required to be used based on third information, wherein the third information comprises related information of the terminal device and/or related information of the first uplink subband.

33. The method according to any one of claims 28, 30, or 31, wherein a RACH resource used by the MSG1 is a RACH resource for the first uplink subband or a RACH resource for the first terminal.

34. The method according to any one of claims 28, 30, or 31, wherein the MSGA or the MSGA PUSCH or a MSGA payload meets one or more of following: a used RACH resource being a RACH resource for the first uplink subband, a used RACH resource being a RACH resource for the first terminal, or first indication information being carried, wherein the first indication information is used for indicating related information of the first terminal and/or related information of the first uplink subband.

35. The method according to any one of claims 28, 30, or 31, wherein the MSG3 or the MSG3 PUSCH comprises second indication information, and the second indication information is used for indicating related information of the first terminal and/or related information of the first uplink subband.

36. The method according to any one of claims 1 to 35, wherein the method further comprises:
receiving, by the terminal device, a first response message for random access transmitted by the network device.

37. The method according to claim 36, wherein a resource carried in the first response message is determined based on fourth information, and the fourth information comprises one or more of following: related information of the terminal device, related information of the first uplink subband, or a RACH resource used by the terminal device to execute random access.

38. The method according to claim 37, wherein in a case that the terminal device meets a first condition, the first response message meets one or more of following:

a resource carried in the first response message being a resource for the first uplink subband;
a resource carried in the first response message being a resource for the first terminal;
a resource carried in the first response message being a resource for a first downlink subband;
a resource carried in the first response message being a resource for a non-first downlink subband;
a radio network temporary identifier RNTI used for scrambling the first response message being an RNTI for a first downlink subband;
an RNTI used for scrambling the first response message being an RNTI for a non-first downlink subband;
an RNTI used for scrambling the first response message being an RNTI for the first terminal; or
an RNTI used for scrambling the first response message being an RNTI for a non-first terminal;
wherein the first condition comprises one or more of following:

belonging to a first terminal;
a RACH resource used for executing random access being a RACH resource for the first terminal;
a RACH resource used for executing random access being a RACH resource for the first uplink subband;
transmitting related information of the first terminal to the network device; or
transmitting the related information of the first uplink subband to the network device.

39. The method according to claim 38, wherein a resource carried in the first response message is the same as or different from a resource carried in a second response message; and/or

the RNTI used for scrambling the first response message is the same as or different from an RNTI used for scrambling a second response message; and/or
a control resource set of a physical downlink control channel PDCCH used for indicating the first response message is the same as or different from a control resource set of a PDCCH used for indicating a second response message; and/or
a search space of a PDCCH used for indicating the first response message is the same as or different from a search space of a PDCCH used for indicating a second response message; and/or
a detection location of a PDCCH used for indicating the first response message is the same as or different from a detection location of a PDCCH used for indicating a second response message,
wherein the second response message comprises a response message for a RACH resource of a non-first uplink subband.

40. The method according to claim 37, wherein in a case that the terminal device meets a second condition, the first response message meets one or more of following:

a resource carried in the first response message being located in a downlink time unit; or
a resource carried in the first response message being a resource for a non-first downlink subband;
wherein the second condition comprises one or more of following:

belonging to a second terminal;
a RACH resource used for executing random access being a RACH resource for a non-first terminal;
no terminal information or subband information being carried in a random access procedure;
a RACH resource used for executing random access being a RACH resource for a non-first uplink subband;
a RACH resource selected or used for executing random access being a RACH resource corresponding to a second RACH configuration;
a first RACH configuration being not identified or selected; or
a RACH resource corresponding to a first RACH configuration being not identified or selected.

41. The method according to any one of claims 1 to 40, wherein the first terminal meets one or more of following:

supporting the first uplink subband;
receiving a RACH configuration for the first uplink subband;
selecting or using a first RACH configuration or a resource corresponding to a first RACH configuration;
selecting or using a RACH resource of the first uplink subband;
carrying related information of the first terminal in a random access procedure;
carrying related information of the first uplink subband in a random access procedure;
receiving a RACH configuration for the first terminal; or
selecting or using a RACH resource of the first terminal.

42. The method according to claim 10 or 40, wherein the second terminal meets one or more of following:

the first uplink subband being not supported;
no RACH configuration for the first uplink subband being received;
selecting or using a RACH resource of a non-first uplink subband;
related information of the first terminal being not carried in a random access procedure;
related information of the first uplink subband being not carried in a random access procedure;
no RACH configuration for the first terminal being received;
selecting or using a RACH resource for a non-first terminal; or
a first RACH configuration or a resource corresponding to a first RACH configuration being not selected or identified.

43. A wireless communication method, comprising:
receiving, by a network device, a first message transmitted by a terminal device, wherein the first message is used for random access, the first message is determined based on first information, and the first information is related to a first uplink subband, or the first information is related to a first terminal.

44. The method according to claim 43, wherein the first uplink subband meets one or more of following:

being located outside an uplink time unit;
being located in a downlink time unit;
being located in a flexible time unit; or
corresponding to an uplink subband full-duplex mode or an uplink subband full-duplex configuration.

45. The method according to claim 43 or 44, wherein the method further comprises:
transmitting, by the network device, first configuration information to the terminal device, wherein the first configuration information comprises a random access channel RACH configuration and/or a first uplink subband configuration.

46. The method according to claim 45, wherein the RACH configuration comprises one or more of following: a RACH resource or a RACH priority parameter, and the RACH resource comprises a preamble and/or a RACH occasion RO.

47. The method according to claim 46, wherein the RACH configuration comprises a first RACH configuration and/or a second RACH configuration, and the first RACH configuration meets one or more of following: being related to the first terminal, being related to the first uplink subband, or comprising a RACH configuration for the first uplink subband; and the second RACH configuration meets one or more of following: being related to a non-first uplink subband, comprising a RACH configuration for a non-first uplink subband, or a RACH configuration for an uplink time unit.

48. The method according to claim 47, wherein at least one of the first RACH configuration or the second RACH configuration are used for performing one or more of following:

selecting a RACH resource by the terminal device;
selecting a RACH priority parameter by the terminal device;
executing random access by the terminal device;
identifying the terminal device by the network device;
transmitting related information of the first terminal by the terminal device; or
transmitting related information of the first uplink subband by the terminal device.

**49.** The method according to claim 48, wherein the transmitting the related information of the first uplink subband by the terminal device comprises: carrying, by the terminal device, the related information of the first uplink subband by using the RACH resource or in a random access procedure; and/or
wherein the transmitting the related information of the first terminal by the terminal device comprises: transmitting, by the terminal device, the related information of the first terminal by using the RACH resource or in a random access procedure.

**50.** The method according to claim 48 or 49, wherein at least one of the first RACH configuration or the second RACH configuration is used by the first terminal.

**51.** The method according to claim 48 or 49, wherein the second RACH configuration is used by the first terminal in a case that there is no first RACH configuration or no available first RACH configuration.

**52.** The method according to claim 48 or 49, wherein the second RACH configuration is used for a second terminal.

**53.** The method according to any one of claims 47 to 52, wherein a RACH resource in the first RACH configuration is located in a first time unit and/or a second time unit;

the first time unit comprises one or more of following: a subframe of the first uplink subband, a slot of the first uplink subband, or a symbol of the first uplink subband; and
the second time unit comprises one or more of following: a subframe of the non-first uplink subband, a slot of the non-first uplink subband, a symbol of the non-first uplink subband, an uplink subframe, an uplink slot, or an uplink symbol.

**54.** The method according to any one of claims 47 to 53, wherein the first RACH configuration and the second RACH configuration meet one or more of following:

the first RACH configuration and the second RACH configuration being uniformly configured;
the first RACH configuration and the second RACH configuration being separately configured;
the first RACH configuration and the second RACH configuration sharing a RACH resource; or
independent RACH resources being configured or used in the first RACH configuration and the second RACH configuration.

**55.** The method according to any one of claims 47 to 54, wherein the first RACH configuration comprises a two-step random access RACH configuration and/or a four-step random access RACH configuration.

**56.** The method according to claim 55, wherein the two-step random access RACH configuration and the four-step random access RACH configuration meet one or more of following:

the two-step random access RACH configuration and the four-step random access RACH configuration being uniformly configured;
the two-step random access RACH configuration and the four-step random access RACH configuration being separately configured;
the two-step random access RACH configuration and the four-step random access RACH configuration sharing a RACH resource; or
the two-step random access RACH configuration and the four-step random access RACH configuration having independent RACH resources.

**57.** The method according to any one of claims 46 to 56, wherein the RACH priority parameter comprises a power adjustment parameter and/or a backoff parameter.

**58.** The method according to any one of claims 46 to 57, wherein the RACH priority parameter comprises a RACH priority parameter for a first uplink subband and/or a RACH priority parameter for a first terminal.

**59.** The method according to any one of claims 46 to 58, wherein the RACH priority parameter comprises a two-step random access RACH priority parameter and/or a four-step random access RACH priority parameter.

**60.** The method according to claim 59, wherein the two-step random access RACH priority parameter and the four-step random access RACH priority parameter meet one or more of following:

the two-step random access RACH priority parameter and the four-step random access RACH priority parameter being uniformly configured;

the two-step random access RACH priority parameter and the four-step random access RACH priority parameter are separately configured;

the two-step random access RACH priority parameter being the same as the four-step random access RACH priority parameter; or

the two-step random access RACH priority parameter being different from the four-step random access RACH priority parameter.

61. The method according to any one of claims 46 to 60, wherein a quantity of the RACH priority parameter is greater than one, and a RACH priority parameter used in a plurality of RACH priority parameters is determined based on second information;

wherein the second information comprises one or more of following:

a RACH priority parameter used by the terminal device in the plurality of RACH priority parameters;

a RACH priority parameter used by the terminal device with a priority in the plurality of RACH priority parameters;

a priority order of the plurality of RACH priority parameters; or

a RACH priority parameter that is prioritized in the plurality of RACH priority parameters.

62. The method according to claim 61, wherein second information corresponding to two-step random access and second information corresponding to four-step random access meet one or more of following:

the second information corresponding to the two-step random access and the second information corresponding to the four-step random access being uniformly configured;

the second information corresponding to the two-step random access and the second information corresponding to the four-step random access being separately configured;

the second information corresponding to the two-step random access being the same as the second information corresponding to the four-step random access; or

the second information corresponding to the two-step random access being different from the second information corresponding to the four-step random access.

63. The method according to claim 61 or 62, wherein the second information is indicated by the network device, or pre-configured by the network device, or selected by the terminal device, or predefined in a protocol.

64. The method according to any one of claims 61 to 63, wherein the plurality of RACH priority parameters comprise one or more of following: a RACH priority parameter for a specific terminal device, a RACH priority parameter for handover, or a RACH priority parameter for network slicing.

65. The method according to any one of claims 45 to 64, wherein the first uplink subband configuration comprises a time domain resource configuration of the first uplink subband and/or a frequency domain resource configuration of the first uplink subband.

66. The method according to claim 65, wherein a time domain resource of the first uplink subband comprises a time domain resource for a second time unit, and the second time unit comprises one or more of a slot, a radio frame, or a symbol.

67. The method according to any one of claims 45 to 66, wherein the first configuration information is configured in one or more of a periodic manner, a semi-static manner, a static manner, or a dynamic manner; and/or

the first configuration information is activated or deactivated or modified in one or more of a dynamic manner, a periodic manner, or a semi-static manner.

68. The method according to any one of claims 45 to 67, wherein the first configuration information is carried in one or more of following: system information, a system information block SIB message, a master information block MIB message, a radio resource control RRC message, downlink control information DCI, or a medium access control control element MAC CE.

**69.** The method according to any one of claims 43 to 68, wherein the method further comprises:
receiving, by the network device, the first information transmitted by the terminal device.

**70.** The method according to claim 69, wherein the first information is carried in one or more of following: a MSG1, a MSGA, a MSG3, a MSGA physical uplink shared channels PUSCH, or a MSG3 PUSCH.

**71.** The method according to any one of claims 45 to 70, wherein the first information is determined based on the first configuration information.

**72.** The method according to claim 71, wherein the first information comprises one or more of following: related information of the first terminal, related information of the first uplink subband, a MSG1, a MSGA, a MSGA PUSCH, a MSG3, a MSG3 PUSCH, content carried in a MSGA PUSCH, or content carried in a MSG3.

**73.** The method according to claim 70 or 72, wherein the MSG1 comprises a MSG1 for the first uplink subband and/or a MSG1 for the first terminal; and/or

the MSGA comprises a MAGA for the first terminal and/or a MSGA for the first uplink subband; and/or
the MSG3 comprises a MAG3 for the first terminal and/or a MSG3 for the first uplink subband; and/or
the MSGA PUSCH comprises a MSGA PUSCH for the first terminal and/or a MSGA PUSCH for the first uplink subband; and/or
the MSG3 PUSCH comprises a MSG3 PUSCH for the first terminal and/or a MSG3 PUSCH for the first uplink subband.

**74.** The method according to any one of claims 45 to 73, wherein configuration information required to be used in the first configuration information is determined based on third information, and the third information comprises related information of the terminal device and/or related information of the first uplink subband.

**75.** The method according to any one of claims 70, 72, or 73, wherein a RACH resource used by the MSG1 is a RACH resource for the first uplink subband or a RACH resource for the first terminal.

**76.** The method according to any one of claims 70, 72, or 73, wherein the MSGA or the MSGA PUSCH or a MSGA payload meets one or more of following: a used RACH resource being a RACH resource for the first uplink subband, a used RACH resource being a RACH resource for the first terminal, or first indication information being carried, wherein the first indication information is used for indicating related information of the first terminal and/or related information of the first uplink subband.

**77.** The method according to any one of claims 70, 72, or 73, wherein the MSG3 or the MSG3 PUSCH comprises second indication information, and the second indication information is used for indicating related information of the first terminal and/or related information of the first uplink subband.

**78.** The method according to any one of claims 43 to 77, wherein the method further comprises:
transmitting, by the network device, a first response message for random access to the terminal device.

**79.** The method according to claim 78, wherein a resource carried in the first response message is determined based on fourth information, and the fourth information comprises one or more of following: related information of the terminal device, related information of the first uplink subband, or a RACH resource used by the terminal device to execute random access.

**80.** The method according to claim 79, wherein in a case that the terminal device meets a first condition, the first response message meets one or more of following:

a resource carried in the first response message being a resource for the first uplink subband;
a resource carried in the first response message being a resource for the first terminal;
a resource carried in the first response message being a resource for a first downlink subband;
a resource carried in the first response message being a resource for a non-first downlink subband;
a radio network temporary identifier RNTI used for scrambling the first response message being an RNTI for a first downlink subband;
an RNTI used for scrambling the first response message being an RNTI for a non-first downlink subband;

an RNTI used for scrambling the first response message being an RNTI for the first terminal; or
an RNTI used for scrambling the first response message being an RNTI for a non-first terminal;
wherein the first condition comprises one or more of following:

belonging to a first terminal;
a RACH resource used for executing random access being a RACH resource for the first terminal;
a RACH resource used for executing random access being a RACH resource for the first uplink subband;
transmitting related information of the first terminal to the network device; or
transmitting the related information of the first uplink subband to the network device.

81. The method according to claim 80, wherein a resource carried in the first response message is the same as or different from a resource carried in a second response message; and/or

the RNTI used for scrambling the first response message is the same as or different from an RNTI used for scrambling a second response message; and/or
a control resource set of a physical downlink control channel PDCCH used for indicating the first response message is the same as or different from a control resource set of a PDCCH used for indicating a second response message; and/or
a search space of a PDCCH used for indicating the first response message is the same as or different from a search space of a PDCCH used for indicating a second response message; and/or
a detection location of a PDCCH used for indicating the first response message is the same as or different from a detection location of a PDCCH used for indicating a second response message,
wherein the second response message comprises a response message for a RACH resource of a non-first uplink subband.

82. The method according to claim 79, wherein in a case that the terminal device meets a second condition, the first response message meets one or more of following:

a resource carried in the first response message being located in a downlink time unit; or
a resource carried in the first response message being a resource for a non-first downlink subband;
wherein the second condition comprises one or more of following:

belonging to a second terminal;
a RACH resource used for executing random access being a RACH resource for a non-first terminal;
no terminal information or subband information being carried in a random access procedure;
a RACH resource used for executing random access being a RACH resource for a non-first uplink subband;
a RACH resource selected or used for executing random access being a RACH resource corresponding to a second RACH configuration;
a first RACH configuration being not identified or selected; or
a RACH resource corresponding to a first RACH configuration being not identified or selected.

83. The method according to any one of claims 43 to 82, wherein the first terminal meets one or more of following:

supporting the first uplink subband;
receiving a RACH configuration for the first uplink subband;
selecting or using a first RACH configuration or a resource corresponding to a first RACH configuration;
selecting or using a RACH resource of the first uplink subband;
carrying related information of the first terminal in a random access procedure;
carrying related information of the first uplink subband in a random access procedure;
receiving a RACH configuration for the first terminal; or
selecting or using a RACH resource of the first terminal.

84. The method according to claim 52 or 82, wherein the second terminal meets one or more of following:

the first uplink subband being not supported;
no RACH configuration for the first uplink subband being received;
selecting or using a RACH resource of a non-first uplink subband;
related information of the first terminal being not carried in a random access procedure;

related information of the first uplink subband being not carried in a random access procedure;

no RACH configuration for the first terminal being received;

selecting or using a RACH resource for a non-first terminal; or

a first RACH configuration or a resource corresponding to a first RACH configuration being not selected or identified.

85. A terminal device, comprising:

an execution unit, configured to execute random access by using first information, wherein the first information is related to a first uplink subband, or the first information is related to a first terminal.

86. The terminal device according to claim 85, wherein the first uplink subband meets one or more of following:

being located outside an uplink time unit;

being located in a downlink time unit;

being located in a flexible time unit; or

corresponding to an uplink subband full-duplex mode or an uplink subband full-duplex configuration.

87. The terminal device according to claim 85 or 86, wherein the terminal device further comprises:

a receiving unit, configured to receive first configuration information transmitted by a network device, wherein the first configuration information comprises a random access channel RACH configuration and/or a first uplink subband configuration.

88. The terminal device according to claim 87, wherein the RACH configuration comprises one or more of following: a RACH resource or a RACH priority parameter, and the RACH resource comprises a preamble and/or a RACH occasion RO.

89. The terminal device according to claim 88, wherein the RACH configuration comprises a first RACH configuration and/or a second RACH configuration, and the first RACH configuration meets one or more of following: being related to the first terminal, being related to the first uplink subband, or comprising a RACH configuration for the first uplink subband; and

the second RACH configuration comprises one or more of following: being related to a non-first uplink subband, comprising a RACH configuration for a non-first uplink subband, or comprising a RACH configuration for an uplink time unit.

90. The terminal device according to claim 89, wherein at least one of the first RACH configuration or the second RACH configuration is used for performing one or more of following:

selecting a RACH resource by the terminal device;

selecting a RACH priority parameter by the terminal device;

executing random access by the terminal device;

identifying the terminal device by the network device;

transmitting related information of the first terminal by the terminal device; or

transmitting related information of the first uplink subband by the terminal device.

91. The terminal device according to claim 90, wherein the transmitting the related information of the first uplink subband by the terminal device comprises: transmitting, by the terminal device, the related information of the first uplink subband by using the RACH resource or in a random access procedure; and/or

wherein the transmitting the related information of the first terminal by the terminal device comprises: transmitting, by the terminal device, the related information of the first terminal by using the RACH resource or in a random access procedure.

92. The terminal device according to claim 90 or 91, wherein at least one of the first RACH configuration or the second RACH configuration is used for the first terminal.

93. The terminal device according to claim 90 or 91, wherein the second RACH configuration is used by the first terminal in a case that there is no first RACH configuration or no available first RACH configuration.

94. The terminal device according to claim 90 or 91, wherein the second RACH configuration is used for a second terminal.

95. The terminal device according to any one of claims 89 to 94, wherein a RACH resource in the first RACH configuration is located in a first time unit and/or a second time unit;

the first time unit comprises one or more of following: a subframe of the first uplink subband, a slot of the first uplink subband, or a symbol of the first uplink subband; and
the second time unit comprises one or more of following: a subframe of the non-first uplink subband, a slot of the non-first uplink subband, a symbol of the non-first uplink subband, an uplink subframe, an uplink slot, or an uplink symbol.

96. The terminal device according to any one of claims 89 to 95, wherein the first RACH configuration and the second RACH configuration meet one or more of following:

the first RACH configuration and the second RACH configuration being uniformly configured;
the first RACH configuration and the second RACH configuration being separately configured;
the first RACH configuration and the second RACH configuration sharing a RACH resource; or
independent RACH resources being configured or used in the first RACH configuration and the second RACH configuration.

97. The terminal device according to any one of claims 89 to 96, wherein the first RACH configuration comprises a two-step random access RACH configuration and/or a four-step random access RACH configuration.

98. The terminal device according to claim 97, wherein the two-step random access RACH configuration and the four-step random access RACH configuration meet one or more of following:

the two-step random access RACH configuration and the four-step random access RACH configuration being uniformly configured;
the two-step random access RACH configuration and the four-step random access RACH configuration being separately configured;
the two-step random access RACH configuration and the four-step random access RACH configuration sharing a RACH resource; or
the two-step random access RACH configuration and the four-step random access RACH configuration having independent RACH resources.

99. The terminal device according to any one of claims 88 to 98, wherein the RACH priority parameter comprises a power adjustment parameter and/or a backoff parameter.

100. The terminal device according to any one of claims 88 to 99, wherein the RACH priority parameter comprises a RACH priority parameter for a first uplink subband and/or a RACH priority parameter for a first terminal.

101. The terminal device according to any one of claims 88 to 100, wherein the RACH priority parameter comprises a two-step random access RACH priority parameter and/or a four-step random access RACH priority parameter.

102. The terminal device according to claim 101, wherein the two-step random access RACH priority parameter and the four-step random access RACH priority parameter meet one or more of following:

the two-step random access RACH priority parameter and the four-step random access RACH priority parameter being uniformly configured;
the two-step random access RACH priority parameter and the four-step random access RACH priority parameter are separately configured;
the two-step random access RACH priority parameter being the same as the four-step random access RACH priority parameter; or
the two-step random access RACH priority parameter being different from the four-step random access RACH priority parameter.

103.

The terminal device according to any one of claims 88 to 102, wherein a quantity of the RACH priority parameter is greater than one, and the terminal device further comprises:

a selecting unit, configured to select a RACH priority parameter based on second information; wherein the second information comprises one or more of following:
a RACH priority parameter used by the terminal device in the plurality of RACH priority parameters;
a RACH priority parameter used by the terminal device with a priority in the plurality of RACH priority parameters;
a priority order of the plurality of RACH priority parameters; or
a RACH priority parameter that is prioritized in the plurality of RACH priority parameters.

**104.**
The terminal device according to claim 103, wherein second information corresponding to two-step random access and second information corresponding to four-step random access meet one or more of following:

the second information corresponding to the two-step random access and the second information corresponding to the four-step random access being uniformly configured;
the second information corresponding to the two-step random access and the second information corresponding to the four-step random access being separately configured;
the second information corresponding to the two-step random access being the same as the second information corresponding to the four-step random access; or
the second information corresponding to the two-step random access being different from the second information corresponding to the four-step random access.

**105.**
The terminal device according to claim 103 or 104, wherein the second information is indicated by the network device, or pre-configured by the network device, or selected by the terminal device, or predefined in a protocol.

**106.**
The terminal device according to any one of claims 103 to 105, wherein the plurality of RACH priority parameters comprise one or more of following: a RACH priority parameter for a specific terminal device, a RACH priority parameter for handover, or a RACH priority parameter for network slicing.

**107.**
The terminal device according to any one of claims 87 to 106, wherein the first uplink subband configuration comprises a time domain resource configuration of the first uplink subband and/or a frequency domain resource configuration of the first uplink subband.

**108.**
The terminal device according to claim 107, wherein a time domain resource of the first uplink subband comprises a time domain resource for a second time unit, and the second time unit comprises one or more of a slot, a radio frame, or a symbol.

**109.**
The terminal device according to any one of claims 87 to 108, wherein the first configuration information is configured in one or more of a periodic manner, a semi-static manner, a static manner, or a dynamic manner; and/or
the first configuration information is activated or deactivated or modified in one or more of a dynamic manner, a periodic manner, or a semi-static manner.

**110.**
The terminal device according to any one of claims 87 to 109, wherein the first configuration information is carried in one or more of following: system information, a system information block SIB message, a master information block MIB message, a radio resource control RRC message, downlink control information DCI, or a medium access control control element MAC CE.

**111.** The terminal device according to any one of claims 85 to 110, wherein the terminal device further comprises:
a transmitting unit, configured to transmit the first information to the network device.

**112.**

The terminal device according to claim 111, wherein the first information is carried in one or more of following: a MSG1, a MSGA, a MSG3, a MSGA physical uplink shared channels PUSCH, or a MSG3 PUSCH.

**113.**
The terminal device according to any one of claims 87 to 112, wherein the terminal device further comprises:
a determining unit, configured to determine the first information based on the first configuration information.

**114.**
The terminal device according to claim 113, wherein the first information comprises one or more of following: related information of the first terminal, related information of the first uplink subband, a MSG1, a MSGA, a MSGA PUSCH, a MSG3, a MSG3 PUSCH, content carried in a MSGA PUSCH, or content carried in a MSG3.

**115.**
The terminal device according to claim 112 or 114, wherein the MSG1 comprises a MSG1 for the first uplink subband and/or a MSG1 for the first terminal; and/or

> the MSGA comprises a MAGA for the first terminal and/or a MSGA for the first uplink subband; and/or
> the MSG3 comprises a MAG3 for the first terminal and/or a MSG3 for the first uplink subband; and/or
> the MSGA PUSCH comprises a MSGA PUSCH for the first terminal and/or a MSGA PUSCH for the first uplink subband; and/or
> the MSG3 PUSCH comprises a MSG3 PUSCH for the first terminal and/or a MSG3 PUSCH for the first uplink subband.

**116.**
The terminal device according to any one of claims 87 to 115, wherein the terminal device further comprises:
a selection unit, configured to select, from the first configuration information based on third information, configuration information required to be used, wherein the third information comprises related information of the terminal device and/or related information of the first uplink subband.

**117.**
The terminal device according to any one of claims 112, 114, or 115, wherein a RACH resource used by the MSG1 is a RACH resource for the first uplink subband or a RACH resource for the first terminal.

**118.**
The terminal device according to any one of claims 112, 114, or 115, wherein the MSGA or the MSGA PUSCH or a MSGA payload meets one or more of following: a used RACH resource being a RACH resource for the first uplink subband, a used RACH resource being a RACH resource for the first terminal, or first indication information being carried, wherein the first indication information is used for indicating related information of the first terminal and/or related information of the first uplink subband.

**119.**
The terminal device according to any one of claims 112, 114, or 115, wherein the MSG3 or the MSG3 PUSCH comprises second indication information, and the second indication information is used for indicating related information of the first terminal and/or related information of the first uplink subband.

**120.**
The terminal device according to any one of claims 85 to 119, wherein the terminal device further comprises:
a receiving unit, configured to receive a first response message for random access transmitted by the network device.

**121.**
The terminal device according to claim 120, wherein a resource carried in the first response message is determined based on fourth information, and the fourth information comprises one or more of following: related information of the terminal device, related information of the first uplink subband, or a RACH resource used by the terminal device to execute random access.

**122.**
The terminal device according to claim 121, wherein in a case that the terminal device meets a first condition, the first response message meets one or more of following:

a resource carried in the first response message being a resource for the first uplink subband;

a resource carried in the first response message being a resource for the first terminal;

a resource carried in the first response message being a resource for a first downlink subband;

a resource carried in the first response message being a resource for a non-first downlink subband;

a radio network temporary identifier RNTI used for scrambling the first response message being an RNTI for a first downlink subband;

an RNTI used for scrambling the first response message being an RNTI for a non-first downlink subband;

an RNTI used for scrambling the first response message being an RNTI for the first terminal; or

an RNTI used for scrambling the first response message being an RNTI for a non-first terminal;

wherein the first condition comprises one or more of following:

belonging to a first terminal;

a RACH resource used for executing random access being a RACH resource for the first terminal;

a RACH resource used for executing random access being a RACH resource for the first uplink subband;

transmitting related information of the first terminal to the network device; or

transmitting the related information of the first uplink subband to the network device.

**123.**

The terminal device according to claim 122, wherein a resource carried in the first response message is the same as or different from a resource carried in a second response message; and/or

the RNTI used for scrambling the first response message is the same as or different from an RNTI used for scrambling a second response message; and/or

a control resource set of a physical downlink control channel PDCCH used for indicating the first response message is the same as or different from a control resource set of a PDCCH used for indicating a second response message; and/or

a search space of a PDCCH used for indicating the first response message is the same as or different from a search space of a PDCCH used for indicating a second response message; and/or

a detection location of a PDCCH used for indicating the first response message is the same as or different from a detection location of a PDCCH used for indicating a second response message,

wherein the second response message comprises a response message for a RACH resource of a non-first uplink subband.

**124.**

The terminal device according to claim 121, wherein in a case that the terminal device meets a second condition, the first response message meets one or more of following:

a resource carried in the first response message being located in a downlink time unit; or

a resource carried in the first response message being a resource for a non-first downlink subband;

wherein the second condition comprises one or more of following:

belonging to a second terminal;

a RACH resource used for executing random access being a RACH resource for a non-first terminal;

no terminal information or subband information being carried in a random access procedure;

a RACH resource used for executing random access being a RACH resource for a non-first uplink subband;

a RACH resource selected or used for executing random access being a RACH resource corresponding to a second RACH configuration;

a first RACH configuration being not identified or selected; or

a RACH resource corresponding to a first RACH configuration being not identified or selected.

**125.**

The terminal device according to any one of claims 85 to 124, wherein the first terminal meets one or more of following:

supporting the first uplink subband;

receiving a RACH configuration for the first uplink subband;

selecting or using a first RACH configuration or a resource corresponding to a first RACH configuration;

selecting or using a RACH resource of the first uplink subband;

carrying related information of the first terminal in a random access procedure;

carrying related information of the first uplink subband in a random access procedure;
receiving a RACH configuration for the first terminal; or
selecting or using a RACH resource of the first terminal.

**126.**
The terminal device according to claim 94 or 124, wherein the second terminal meets one or more of following:

the first uplink subband being not supported;
no RACH configuration for the first uplink subband being received;
selecting or using a RACH resource of a non-first uplink subband;
related information of the first terminal being not carried in a random access procedure;
related information of the first uplink subband being not carried in a random access procedure;
no RACH configuration for the first terminal being received;
selecting or using a RACH resource for a non-first terminal; or
a first RACH configuration or a resource corresponding to a first RACH configuration being not selected or identified.

**127.**
A network device, comprising:
a receiving unit, configured to receive a first message transmitted by a terminal device, wherein the first message is used for random access, the first message is determined based on first information, and the first information is related to a first uplink subband or the first information is related to a first terminal.

**128.**
The network device according to claim 127, wherein the first uplink subband meets one or more of following:

being located outside an uplink time unit;
being located in a downlink time unit;
being located in a flexible time unit; or
corresponding to an uplink subband full-duplex mode or an uplink subband full-duplex configuration.

**129.**
The network device according to claim 127 or 128, wherein the network device further comprises:
a transmitting unit, configured to transmit first configuration information to the terminal device, wherein the first configuration information comprises a random access channel RACH configuration and/or a first uplink subband configuration.

**130.**
The network device according to claim 129, wherein the RACH configuration comprises one or more of following: a RACH resource or a RACH priority parameter, and the RACH resource comprises a preamble and/or a RACH occasion RO.

**131.**
The network device according to claim 130, wherein the RACH configuration comprises a first RACH configuration and/or a second RACH configuration, and the first RACH configuration meets one or more of following: being related to the first terminal, being related to the first uplink subband, or comprising a RACH configuration for the first uplink subband; and the second RACH configuration meets one or more of following: being related to a non-first uplink subband, comprising a RACH configuration for a non-first uplink subband, or comprising a RACH configuration for an uplink time unit.

**132.**
The network device according to claim 131, wherein at least one of the first RACH configuration or the second RACH configuration is used for performing one or more of following:

selecting a RACH resource by the terminal device;
selecting a RACH priority parameter by the terminal device;
executing random access by the terminal device;
identifying the terminal device by the network device;
transmitting related information of the first terminal by the terminal device; or
transmitting related information of the first uplink subband by the terminal device.

**133.**

The network device according to claim 132, wherein the transmitting the related information of the first uplink subband by the terminal device comprises: carrying, by the terminal device, the related information of the first uplink subband by using the RACH resource or in a random access procedure; and/or

the transmitting the related information of the first terminal by the terminal device comprises: transmitting, by the terminal device, the related information of the first terminal by using the RACH resource or in a random access procedure.

**134.**

The network device according to claim 132 or 133, wherein at least one of the first RACH configuration or the second RACH is used by the first terminal.

**135.**

The network device according to claim 132 or 133, wherein the second RACH configuration is used by the first terminal in a case that there is no first RACH configuration or no first RACH configuration is available.

**136.**

The network device according to claim 132 or 133, wherein the second RACH configuration is used by a second terminal.

**137.**

The network device according to any one of claims 131 to 136, wherein a RACH resource in the first RACH configuration is located in a first time unit and/or a second time unit;

> the first time unit comprises one or more of following: a subframe of the first uplink subband, a slot of the first uplink subband, or a symbol of the first uplink subband; and
> the second time unit comprises one or more of following: a subframe of the non-first uplink subband, a slot of the non-first uplink subband, a symbol of the non-first uplink subband, an uplink subframe, an uplink slot, or an uplink symbol.

**138.**

The network device according to any one of claims 131 to 137, wherein the first RACH configuration and the second RACH configuration meet one or more of following:

> the first RACH configuration and the second RACH configuration being uniformly configured;
> the first RACH configuration and the second RACH configuration being separately configured;
> the first RACH configuration and the second RACH configuration sharing a RACH resource; or
> independent RACH resources being configured or used in the first RACH configuration and the second RACH configuration.

**139.**

The network device according to any one of claims 131 to 138, wherein the first RACH configuration comprises a two-step random access RACH configuration and/or a four-step random access RACH configuration.

**140.**

The network device according to claim 139, wherein the two-step random access RACH configuration and the four-step random access RACH configuration meet one or more of following:

> the two-step random access RACH configuration and the four-step random access RACH configuration being uniformly configured;
> the two-step random access RACH configuration and the four-step random access RACH configuration being separately configured;
> the two-step random access RACH configuration and the four-step random access RACH configuration sharing a RACH resource; or
> the two-step random access RACH configuration and the four-step random access RACH configuration having independent RACH resources.

**141.**

The network device according to any one of claims 130 to 140, wherein the RACH priority parameter comprises a power adjustment parameter and/or a backoff parameter.

**142.**
The network device according to any one of claims 130 to 141, wherein the RACH priority parameter comprises a RACH priority parameter for a first uplink subband and/or a RACH priority parameter for a first terminal.

**143.**
The network device according to any one of claims 130 to 142, wherein the RACH priority parameter comprises a two-step random access RACH priority parameter and/or a four-step random access RACH priority parameter.

**144.**
The network device according to claim 143, wherein the two-step random access RACH priority parameter and the four-step random access RACH priority parameter meet one or more of following:

the two-step random access RACH priority parameter and the four-step random access RACH priority parameter being uniformly configured;
the two-step random access RACH priority parameter and the four-step random access RACH priority parameter are separately configured;
the two-step random access RACH priority parameter being the same as the four-step random access RACH priority parameter; or
the two-step random access RACH priority parameter being different from the four-step random access RACH priority parameter.

**145.**
The network device according to any one of claims 130 to 144, wherein a quantity of the RACH priority parameter is greater than one, and a RACH priority parameter used in a plurality of RACH priority parameters is determined based on second information;
wherein the second information comprises one or more of following:

a RACH priority parameter used by the terminal device in the plurality of RACH priority parameters;
a RACH priority parameter used by the terminal device with a priority in the plurality of RACH priority parameters;
a priority order of the plurality of RACH priority parameters; or
a RACH priority parameter that is prioritized in the plurality of RACH priority parameters.

**146.**
The network device according to claim 145, wherein second information corresponding to two-step random access and second information corresponding to four-step random access meet one or more of following:

the second information corresponding to the two-step random access and the second information corresponding to the four-step random access being uniformly configured;
the second information corresponding to the two-step random access and the second information corresponding to the four-step random access being separately configured;
the second information corresponding to the two-step random access being the same as the second information corresponding to the four-step random access; or
the second information corresponding to the two-step random access being different from the second information corresponding to the four-step random access.

**147.**
The network device according to claim 145 or 146, wherein the second information is indicated by the network device, or pre-configured by the network device, or selected by the terminal device, or predefined in a protocol.

**148.**
The network device according to any one of claims 145 to 147, wherein the plurality of RACH priority parameters comprise one or more of following: a RACH priority parameter for a specific terminal device, a RACH priority parameter for handover, or a RACH priority parameter for network slicing.

**149.**
The network device according to any one of claims 129 to 148, wherein the first uplink subband configuration comprises a time domain resource configuration of the first uplink subband and/or a frequency domain resource configuration of the first uplink subband.

**150.**

The network device according to claim 149, wherein a time domain resource of the first uplink subband comprises a time domain resource for a second time unit, and the second time unit comprises one or more of a slot, a radio frame, or a symbol.

**151.**

The network device according to any one of claims 129 to 150, wherein the first configuration information is configured in one or more of a periodic manner, a semi-static manner, a static manner, or a dynamic manner; and/or

the first configuration information is activated or deactivated or modified in one or more of a dynamic manner, a periodic manner, or a semi-static manner.

**152.**

The network device according to any one of claims 129 to 151, wherein the first configuration information is carried in one or more of following: system information, a system information block SIB message, a master information block MIB message, a radio resource control RRC message, downlink control information DCI, or a medium access control control element MAC CE.

**153.**

The network device according to any one of claims 127 to 152, wherein the network device further comprises:

a receiving unit, configured to receive the first information transmitted by the terminal device.

**154.**

The network device according to claim 153, wherein the first information is carried in one or more of following: a MSG1, a MSGA, a MSG3, a MSGA physical uplink shared channels PUSCH, or a MSG3 PUSCH.

**155.**

The network device according to any one of claims 129 to 154, wherein the first information is determined based on the first configuration information.

**156.**

The network device according to claim 155, wherein the first information comprises one or more of following: related information of the first terminal, related information of the first uplink subband, a MSG1, a MSGA, a MSGA PUSCH, a MSG3, a MSG3 PUSCH, content carried in a MSGA PUSCH, or content carried in a MSG3.

**157.**

The network device according to claim 154 or 156, wherein the MSG1 comprises a MSG1 for the first uplink subband and/or a MSG1 for the first terminal; and/or

the MSGA comprises a MAGA for the first terminal and/or a MSGA for the first uplink subband; and/or
the MSG3 comprises a MAG3 for the first terminal and/or a MSG3 for the first uplink subband; and/or
the MSGA PUSCH comprises a MSGA PUSCH for the first terminal and/or a MSGA PUSCH for the first uplink subband; and/or
the MSG3 PUSCH comprises a MSG3 PUSCH for the first terminal and/or a MSG3 PUSCH for the first uplink subband.

**158.**

The network device according to any one of claims 129 to 157, wherein configuration information required to be used in the first configuration information is determined based on third information, and the third information comprises related information of the terminal device and/or related information of the first uplink subband.

**159.**

The network device according to any one of claims 154, 156, or 157, wherein a RACH resource used by the MSG1 is a RACH resource for the first uplink subband or a RACH resource for the first terminal.

**160.**

The network device according to any one of claims 154, 156, or 157, wherein the MSGA or the MSGA PUSCH or a MSGA payload meets one or more of following: a used RACH resource being a RACH resource for the first uplink subband, a used RACH resource being a RACH resource for the first terminal, or first indication information being carried, wherein the first indication information is used for indicating related information of the first terminal and/or related information of the first uplink subband.

**161.**

The network device according to any one of claims 154, 156, or 157, wherein the MSG3 or the MSG3 PUSCH comprises second indication information, and the second indication information is used for indicating related information of the first terminal and/or related information of the first uplink subband.

**162.**

The network device according to any one of claims 127 to 161, wherein the network device further comprises: transmitting, by the network device, a first response message for random access to the terminal device.

**163.**

The network device according to claim 162, wherein a resource carried in the first response message is determined based on fourth information, and the fourth information comprises one or more of following: related information of the terminal device, related information of the first uplink subband, or a RACH resource used by the terminal device to execute random access.

**164.**

The network device according to claim 163, wherein in a case that the terminal device meets a first condition, the first response message meets one or more of following:

a resource carried in the first response message being a resource for the first uplink subband;
a resource carried in the first response message being a resource for the first terminal;
a resource carried in the first response message being a resource for a first downlink subband;
a resource carried in the first response message being a resource for a non-first downlink subband; and
a radio network temporary identifier RNTI used for scrambling the first response message being an RNTI for a first downlink subband;
an RNTI used for scrambling the first response message being an RNTI for a non-first downlink subband;
an RNTI used for scrambling the first response message being an RNTI for the first terminal; or
an RNTI used for scrambling the first response message being an RNTI for a non-first terminal;
wherein the first condition comprises one or more of following:

belonging to a first terminal;
a RACH resource used for executing random access being a RACH resource for the first terminal;
a RACH resource used for executing random access being a RACH resource for the first uplink subband;
transmitting related information of the first terminal to the network device; or
transmitting the related information of the first uplink subband to the network device.

**165.**

The network device according to claim 164, wherein a resource carried in the first response message is the same as or different from a resource carried in a second response message; and/or

the RNTI used for scrambling the first response message is the same as or different from an RNTI used for scrambling a second response message; and/or
a control resource set of a physical downlink control channel PDCCH used for indicating the first response message is the same as or different from a control resource set of a PDCCH used for indicating a second response message; and/or
a search space of a PDCCH used for indicating the first response message is the same as or different from a search space of a PDCCH used for indicating a second response message; and/or
a detection location of a PDCCH used for indicating the first response message is the same as or different from a detection location of a PDCCH used for indicating a second response message,
wherein the second response message comprises a response message for a RACH resource of a non-first uplink subband.

**166.**

The network device according to claim 163, wherein in a case that the terminal device meets a second condition, the first response message meets one or more of following:

a resource carried in the first response message being located in a downlink time unit; or

a resource carried in the first response message being a resource for a non-first downlink subband;

wherein the second condition comprises one or more of following:

belonging to a second terminal;

a RACH resource used for executing random access being a RACH resource for a non-first terminal;

no terminal information or subband information being carried in a random access procedure;

a RACH resource used for executing random access being a RACH resource for a non-first uplink subband;

a RACH resource selected or used for executing random access being a RACH resource corresponding to a second RACH configuration;

a first RACH configuration being not identified or selected; or

a RACH resource corresponding to a first RACH configuration being not identified or selected.

**167.**
The network device according to any one of claims 127 to 166, wherein the first terminal meets one or more of following:

supporting the first uplink subband;

receiving a RACH configuration for the first uplink subband;

selecting or using a first RACH configuration or a resource corresponding to a first RACH configuration;

selecting or using a RACH resource of the first uplink subband;

carrying related information of the first terminal in a random access procedure;

carrying related information of the first uplink subband in a random access procedure;

receiving a RACH configuration for the first terminal; or

selecting or using a RACH resource of the first terminal.

**168.**
The network device according to claim 136 or 166, wherein the second terminal meets one or more of following:

the first uplink subband being not supported;

no RACH configuration for the first uplink subband being received;

selecting or using a RACH resource of a non-first uplink subband;

related information of the first terminal being not carried in a random access procedure;

related information of the first uplink subband being not carried in a random access procedure;

no RACH configuration for the first terminal being received;

selecting or using a RACH resource for a non-first terminal; or

a first RACH configuration or a resource corresponding to a first RACH configuration being not selected or identified.

**169.**
A terminal device, comprising a memory and a processor, wherein the memory is configured to store a program, and the processor is configured to invoke the program in the memory to execute the method according to any one of claims 1 to 42.

**170.**
A network device, comprising a transceiver, a memory, and a processor, wherein the memory is configured to store a program, and the processor is configured to invoke the program in the memory to execute the method according to any one of claims 43 to 84.

**171.**
An apparatus, comprising a processor, configured to invoke a program from a memory to execute the method according to any one of claims 1 to 42.

**172.**
An apparatus, comprising a processor, configured to invoke a program from a memory to execute the method according to any one of claims 43 to 84.

**173.**
A chip, comprising a processor, configured to invoke a program from a memory to cause a device installed with the chip to execute the method according to any one of claims 1 to 42.

**174.**
A chip, comprising a processor, configured to invoke a program from a memory to cause a device installed with the chip to execute the method according to any one of claims 43 to 84.

**175.**
A computer-readable storage medium, wherein the computer-readable storage medium stores a program, and the program causes a computer to execute the method according to any one of claims 1 to 42.

**176.**
A computer-readable storage medium, wherein the computer-readable storage medium stores a program, and the program causes a computer to execute the method according to any one of claims 43 to 84.

**177.**
A computer program product, comprising a program that causes a computer to execute the method according to any one of claims 1 to 42.

**178.**
A computer program product, comprising a program that causes a computer to execute the method according to any one of claims 43 to 84.

**179.**
A computer program, wherein the computer program causes a computer to execute the method according to any one of claims 1 to 42.

**180.**
A computer program, wherein the computer program causes a computer to execute the method according to any one of claims 43 to 84.

100

120

110

120

FIG. 1

Terminal device

Network device

S210. MSG1

S220. MSG2

S230. MSG3

S240. MSG4

FIG. 2

FIG. 3

FIG. 4

FIG. 5

Frequency

| | | D | D | F | F | F | F | | |
|---|---|---|---|---|---|---|---|---|---|
| D | D | ULsub | ULsub | ULsub | ULsub | ULsub | ULsub | U | U |
| | | D | D | F | F | F | F | | |
| 0 | 1 | 2 | 3 | 4 | 5 | 6 | 7 | 8 | 9 |

Slot

| ULsub | Uplink part | D | Downlink slot |
|---|---|---|---|
| U | Uplink slot | F | Flexible slot |

FIG. 6

| Terminal device | | Network device |
|---|---|---|

S710. Execute random access

FIG. 7

Terminal device
800

Execution unit 810

FIG. 8

Network device
900

Receiving unit 910

FIG. 9

Apparatus 1000

Processor
1010

Memory
1020

Transceiver
1030

FIG. 10

## INTERNATIONAL SEARCH REPORT

| | International application No. |
|---|---|
| | **PCT/CN2023/074028** |

| A. | CLASSIFICATION OF SUBJECT MATTER |
|---|---|
| | H04W74/00(2009.01)i |

According to International Patent Classification (IPC) or to both national classification and IPC

| B. | FIELDS SEARCHED |
|---|---|

Minimum documentation searched (classification system followed by classification symbols)

    IPC:H04W

Documentation searched other than minimum documentation to the extent that such documents are included in the fields searched

Electronic data base consulted during the international search (name of data base and, where practicable, search terms used)

    CNABS, CNTXT, VEN, EPTXT, WOTXT, USTXT, CNKI, 3GPP: 能力, 子带, 全双工, 随机接入, 支持, 配置, 资源, ability, capability, MSG, RACH, SBFD, configure, resource

| C. | DOCUMENTS CONSIDERED TO BE RELEVANT |
|---|---|

| Category* | Citation of document, with indication, where appropriate, of the relevant passages | Relevant to claim No. |
|---|---|---|
| E | CN 116250206 A (BEIJING XIAOMI MOBILE SOFTWARE CO., LTD.) 09 June 2023 (2023-06-09)<br>    description, paragraphs [0034]-[0275] | 1, 27-28, 35-36, 41, 43, 69-70, 77-78, 83, 85, 111-112, 119-120, 125, 127, 153-154, 161-162, 167, 169-180 |
| X | WO 2022221984 A1 (QUALCOMM INC. et al.) 27 October 2022 (2022-10-27)<br>    description, paragraphs [0028]-[0149] | 1-180 |
| X | CN 114303340 A (BEIJING XIAOMI MOBILE SOFTWARE CO., LTD.) 08 April 2022 (2022-04-08)<br>    description, paragraphs [0037]-[0204] | 1-180 |
| A | US 2021152418 A1 (QUALCOMM INC.) 20 May 2021 (2021-05-20)<br>    entire document | 1-180 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 October 2023** | **12 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

| Patent document<br>cited in search report | | | Publication date<br>(day/month/year) | Patent family member(s) | | | Publication date<br>(day/month/year) |
|---|---|---|---|---|---|---|---|
| CN | 116250206 | A | 09 June 2023 | None | | | |
| WO | 2022221984 | A1 | 27 October 2022 | None | | | |
| CN | 114303340 | A | 08 April 2022 | WO | 2023097525 | A1 | 08 June 2023 |
| US | 2021152418 | A1 | 20 May 2021 | EP | 4059155 | A1 | 21 September 2022 |
| | | | | EP | 4059155 | B1 | 16 August 2023 |
| | | | | WO | 2021096612 | A1 | 20 May 2021 |
| | | | | US | 11729050 | B2 | 15 August 2023 |

<div align="center">

**INTERNATIONAL SEARCH REPORT**
Information on patent family members

</div>

International application No.

**PCT/CN2023/074028**

Form PCT/ISA/210 (patent family annex) (July 2022)